(19) Europäisches Patentamt / European Patent Office / Office européen des brevets

(11) **EP 4 469 828 B1**

(12) **EUROPÄISCHE PATENTSCHRIFT**

(45) Veröffentlichungstag und Bekanntmachung des Hinweises auf die Patenterteilung:
**18.03.2026   Patentblatt 2026/12**

(21) Anmeldenummer: **23701934.4**

(22) Anmeldetag: **24.01.2023**

(51) Internationale Patentklassifikation (IPC):
**G01S 19/21** (2010.01)

(52) Gemeinsame Patentklassifikation (CPC):
**G01S 19/21**

(86) Internationale Anmeldenummer:
**PCT/EP2023/051647**

(87) Internationale Veröffentlichungsnummer:
**WO 2023/139277 (27.07.2023 Gazette 2023/30)**

(54) **VERFAHREN ZUR REDUKTION VON AUSWIRKUNGEN EINER STÖRUNTERDRÜCKUNG AUF DIE MESSUNG DER TRÄGERPHASE EINES SATELLITENNAVIGATIONSSIGNALS AM ORT SEINES EMPFANGS SOWIE ANWENDUNGEN DIESES VERFAHRENS**

METHOD FOR REDUCING THE EFFECTS OF NOISE SUPPRESSION ON THE MEASUREMENT OF THE CARRIER PHASE OF A SATELLITE NAVIGATION SIGNAL AT THE POINT OF ITS RECEPTION AND APPLICATIONS OF THIS METHOD

PROCÉDÉ DE RÉDUCTION DES EFFETS DE SUPPRESSION DU BRUIT SUR LA MESURE DE LA PHASE PORTEUSE D'UN SIGNAL DE NAVIGATION PAR SATELLITE À SON POINT DE RÉCEPTION, ET APPLICATIONS DE CE PROCÉDÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.01.2022   DE 102022101576**

(43) Veröffentlichungstag der Anmeldung:
**04.12.2024   Patentblatt 2024/49**

(73) Patentinhaber: **Deutsches Zentrum für Luft- und Raumfahrt e.V.**
**53227 Bonn (DE)**

(72) Erfinder:
• **BAMBERG, Tobias**
  **51491 Overath (DE)**
• **MEURER, Michael**
  **82243 Wessling (DE)**

(74) Vertreter: **dompatent**
**Partnerschaft von Patentanwälten und Rechtsanwälten mbB**
**Deichmannhaus am Dom**
**Bahnhofsvorplatz 1**
**50667 Köln (DE)**

(56) Entgegenhaltungen:
**US-A1- 2013 241 768**

• **BAMBERG TOBIAS ET AL: "Combining High Precision and Interference Resilient Positioning Using Spatial Filtering for Real-World Jamming Scenarios", GNSS 2022 - PROCEEDINGS OF THE 35TH INTERNATIONAL TECHNICAL MEETING OF THE SATELLITE DIVISION OF THE INSTITUTE OF NAVIGATION (ION GNSS+ 2022), THE INSTITUTE OF NAVIGATION, 8551 RIXLEW LANE SUITE 360 MANASSAS, VA 20109, USA, 23 September 2022 (2022-09-23), pages 2074 - 2089, XP056017197**
• **BAMBERG TOBIAS ET AL: "Mitigation of Carrier Phase Distortions Induced by Spatial Filtering using Antenna Arrays", GNSS 2020 - PROCEEDINGS OF THE 33RD INTERNATIONAL TECHNICAL MEETING OF THE SATELLITE DIVISION OF THE INSTITUTE OF NAVIGATION (ION GNSS+ 2020), THE INSTITUTE OF NAVIGATION, 8551 RIXLEW LANE SUITE 360 MANASSAS, VA 20109, USA, 25 September 2020 (2020-09-25), pages 3120 - 3131, XP056016261, DOI: 10.33012/2020.17707**

- **ZHAO HONGWEI ET AL: "Adaptive beamforming and phase bias compensation for GNSS receiver", JOURNAL OF SYSTEMS ENGINEERING AND ELECTRONICS, vol. 26, no. 1, 1 February 2015 (2015-02-01), pages 10 - 18, XP093038609, Retrieved from the Internet <URL:https://ieeexplore.ieee.org/ielx7/5971804/7063889/07064074.pdf?tp=& arnumber=7064074&isnumber=7063889& ref=aHR0cHM6Ly9pZWVleHBsb3JlLmllZWU ub3JnL2RvY3VtZW50LzcwNjQwNzQ=> DOI: 10.1109/JSEE.2015.00002**

**Beschreibung**

Die vorliegende Anmeldung nimmt die Priorität der deutschen Patentanmeldung 10 2022 101 576.9 vom 24. Januar 2022 in Anspruch.

Die Erfindung betrifft ein Verfahren zur Reduktion von Auswirkungen einer Störunterdrückung auf die Messung der Trägerphase eines Satellitennavigationssignals am Ort seines Empfangs. Ferner betrifft die Erfindung ein Verfahren zur Ermittlung des Pseudo-Abstandes eines Empfängers für Satellitennavigationssignale zu einem Satelliten sowie ein Verfahren zur Bestimmung der Position eines Empfängers für Satellitennavigationssignale, wobei in diesen beiden Verfahren das Verfahren zur Reduktion von Auswirkungen der Störunterdrückung auf die Messung der Trägerphase des Satellitennavigationssignals eingesetzt wird.

Empfänger von Globalen Satelliten-Navigationssystemen (GNSS) sind anfällig für Störsignale. Eine erfolgreiche Methode zur Mitigation von Störsignalen sind Mehrantennensysteme, welche die Eingangssignale der einzelnen Antennenkanäle in geeigneter Weise überlagern womit sich eine Störsignalunterdrückung durchführen lässt. Dazu werden die Signale mit einem komplexen Faktor (Strahlformungs-Gewicht) multipliziert und anschließend aufaddiert. Das Störsignal kann so mittels Vorweißen (pre-whitening) oder Setzen einer räumlichen Null (Nulling) unterdrückt werden. Zusätzlich kann das Nutzsignal durch geeignete Überlagerung verstärkt werden (z.B. Eigenbeamformer).

Ein GNSS-Signal besteht typischerweise aus einem modulierten Codesignal, welches mit Hilfe eines Trägersignals auf eine Zielfrequenz (z.B. L1-Band) hochgemischt wird. Das Codesignal enthält den PRN-Code und (falls vorhanden) eine Navigationsnachricht. Ein herkömmlicher GNSS-Empfänger entfernt das Trägersignal und nutzt das Codesignal zur Bestimmung der Pseudorange und damit der Position. Für einen solchen Empfänger ist lediglich relevant, dass das Trägersignal entfernt werden kann, nicht aber, welche (absolute) Phasenlage dieses zu einem bestimmten Zeitpunkt hat. Für eine hochgenaue Positionierung wird jedoch weiterhin die Trägerphase bzw. die Trägerphasenlage zu einem bestimmten Zeitpunkt herangezogen. Durch das räumliche Filtern im Zusammenhang mit der Störsignalunterdrückung werden die Trägerphasen der Satellitennavigationssignale verändert. Die Trägerphasenlagen der verschiedenen Satellitennavigationssignale lassen sich nach der Störsignalunterdrückung nicht mehr auf einen Raumpunkt beziehen. Dies ist jedoch für eine Positionsbestimmung mittels Trägerphase erforderlich. Die Codephase ist weniger problematisch, da deren Genauigkeit (typischerweise bei ca. 3 m) deutlich geringer ist und die Codephasen durch die räumliche Filterung maximal um eine Wellenlänge der Trägerphase (typischerweise ca. 19 cm) verschoben werden.

Ein Nachteil der Störsignalunterdrückung ist also, dass durch die Überlagerung der Eingangssignale die Trägerphase der Eingangssignale richtungsabhängig verfälscht werden und eine exakte Bestimmung der ursprünglichen Trägerphasen damit nicht mehr möglich ist. Die exakte Trägerphase (als Absolutwert) wird allerdings zur Positionsbestimmung des Empfängers bei Verwendung in hochgenauen Positionierungsalgorithmen wie z.B. Real Time Kinematics (RTK) oder Precise Point Positioning (PPP) benötigt. Auch dient die Trägerphaseninformation zur Bestimmung der Einfallsrichtung des Empfangssignals. Diesbezüglich ist allerdings der Relativwert ausreichend, d.h. die Trägerphasenverschiebung am Ort der einzelnen Antennen des Arrays relativ zueinander.

Im Stand der Technik existieren zwei verschiedene Ansätze, um die verfälschte Trägerphase zu korrigieren:

1. Die Richtungsabhängigkeit eines Antennenarrays kann durch die sogenannte räumliche Phasensignatur (Steering-Vector) charakterisiert werden. Diese beschreibt die Phasenlage des einfallenden Signals an den verschiedenen Antennenelementen relativ zu einem Fixpunkt. Ist die räumliche Phasensignatur des einfallenden Signals bekannt, so kann der Phasenfehler berechnet und die Trägerphase des einfallenden Signals korrigiert werden.

Es gibt verschiedene Ansätze, die Phasensignatur zu berechnen:

    a. Das Mehrantennensystem wird in einer Messkammer vermessen und die richtungsabhängige Phasensignatur (oder eine daraus abgeleitete Korrekturgröße) wird in einer Tabelle gespeichert. Bei Kenntnis der Einfallsrichtungen der Signale und der Lage des Antennenarrays kann so der Phasenfehler bestimmt und korrigiert werden.

    Der Nachteil dieses Ansatzes ist, dass das Antennenarray vermessen werden muss. Dies ist meistens nur mit hohen Kosten in einer Antennenmesskammer möglich. Zudem ändert sich die räumliche Phasensignatur des Antennenarrays bei Änderungen im Nahfeld sehr stark, sodass eine Messung nur für eine vordefinierte Umgebung gültig ist. Außerdem müssen die Einfallsrichtungen der Signale bekannt sein und das verwendete Antennenarray muss kalibriert sein. Beides ist mit zusätzlichem Aufwand und damit erhöhten Kosten verbunden. (Die Kalibrierung ist erforderlich, um die unterschiedlichen Signallaufzeiten im Frontend und der weiteren Komponenten zu kompensieren).

    b. Unter der Annahme, dass das Nutzsignal die größte Leistung hat, kann die räumliche Phasensignatur während des Betriebs des Empfängers geschätzt werden. Ohne Störsignal ist diese Annahme bei GNSS Signalen nach der Korrelation mit dem satellitentypischen Spreizcode erfüllt. Ist jedoch ein Störsignal vorhanden, so muss dieses für eine Schätzung der Phasensignatur zuerst unterdrückt werden. Die Mitigation mittels Vorweißen oder Setzen einer räumlichen Null wiederrum verändert den Phasenvektor. Bekannte Verfahren bestimmen erst den veränderten Phasenvektor und rechnen die Mitigation danach heraus.

Dieser Ansatz hat den Nachteil, dass aus der geschätzten Phasensignatur die Mitigation wieder herausgerechnet werden muss. Dadurch wird das vorher unterdrückte Störsignal wieder in die Schätzung hereingerechnet, sodass die geschätzte Phasensignatur von der tatsächlichen Phasensignatur des eintreffenden Signals abweicht. Dadurch wiederum wird die berechnete Korrektur der Trägerphase verändert. Dieser Ansatz funktioniert nur, solange entweder das Störsignal sehr klein ist, oder der Phasenvektor des einfallenden Signals senkrecht zum Phasenvektor des Störsignals steht.

2. Die Anordnung der Antennenelemente des Arrays wird auf festgelegte Systeme beschränkt. Dabei wird meist eine punktsymmetrische Anordnung der Antennenelemente mit dem Symmetriepunkt im Zentrum des Arrays vorausgesetzt. Je nach Ansatz muss es zudem ein Antennenelement im Zentrum des Arrays geben oder die Wahl der Gewichte muss eingeschränkt werden. Unter der Annahme von idealisierten, isotropen Antennenelementen lässt sich so ein Einfluss auf die Trägerphase komplett verhindern. Weichen die Antennenelemente nur leicht von diesem Ideal ab, so entsteht ein Phasenfehler der Trägerphase, der jedoch relativ klein ist.

Nachteil hierbei ist, dass die Anordnung der Antennenelemente vorgegeben ist. Es können also nicht beliebige Antennenarrays verwendet werden. Weichen die Antennenelemente zudem von idealisierten, isotropen Strahlern ab, so wird die Trägerphase wieder stärker verfälscht. Bekannte Ansätze reduzieren zudem die Anzahl der Freiheitsgrade bei der Unterdrückung von Störsignalen um den Faktor 2. Das heißt z.B., dass ein Antennenarray mit vier Elementen statt drei nur noch ein Störsignal unterdrücken kann.

Aus US-A-2002/0169578 ist ein Verfahren zur Störsignalunterdrückung und Lagebestimmung eines Satellitennavigationssignalempfängers bekannt. Das aus der Störsignalunterdrückung resultierende Signal wird in einem herkömmlichen, d.h. Codephasen basierten GNSS-Empfänger verarbeitet. Nach dem bekannten Verfahren wird eine gemeinsame Strahlformung für sämtliche Satellitennavigationssignale durchgeführt, was individuelle, richtungsabhängige Phasenfehler für die verschiedenen Satellitennavigationssignale verursacht.

Aus WO-A-02/051028 ist die Störsignalunterdrückung und Verstärkung eines Nutzsignals unter Kombination verschiedener Verfahren bekannt. Eine Stabilisierung der Trägerphasen nach der Störsignalunterdrückung findet bei diesem Verfahren nicht statt. Diese Verfahren ist daher ebenfalls nur für Codephasen basierte GNSS-Empfänger geeignet.

US-A-2017/0102445 betrifft die Kombination von Antennensignalen eines Antennenarrays zu einem einzigen Signal (Beamforming). Nach dem bekannten Verfahren wird das resultierende Signal mit dem Signal einer Referenzantenne verglichen, wobei die Gewichte so angepasst werden, dass das Nutzsignal am stärksten ist und sich möglichst wenig von dem Signal an der Referenzantenne unterscheidet. Ein Vergleich mit der Referenzantenne ist jedoch nur solange möglich, wie das Nutzsignal an der Referenzantenne noch verwertbar ist. Liegt neben dem Nutzsignal noch ein Störsignal vor, welches deutlich stärker ist, als das Nutzsignal, so kann dieses Signal nicht mehr mit einer Einzelantenne ausgewertet werden und damit ist auch kein Vergleich zu der Referenzantenne mehr möglich.

WO-A-98/032239 beschreibt ein Verfahren zur Störsignalunterdrückung unter Verwendung von Notch-Filtern und die anschließende Kombination der gefilterten Signale zur zusätzlichen räumlichen Störsignalunterdrückung mittels räumlicher Filterung. Dabei wird versucht, die Verstärkung der einzelnen Signale wie im Falle einer Isotropenantenne zu gewährleisten, was bedeutet, dass das Satellitensignal durch den Filter möglichst nicht abgeschwächt wird. BAMBERG TOBIAS ET AL "Mitigation of Carrier Phase Distortions Induced by Spatial Filtering using Antenna Arrays" beschreibt ein Verfahren zur GNSS-Störsignalunterdrückung mit Hilfe von Raumfiltern und Eigenbeamformern.

Aufgabe der Erfindung ist es, die negativen Einflüsse der Störsignalunterdrückung bei Satellitennavigationssignalen auf die Messung der Trägerphase weiter zu reduzieren.

Zur Lösung dieser Aufgabe wird mit der Erfindung ein Verfahren zur Reduktion von Auswirkungen einer Störunterdrückung auf die Messung der Trägerphasen von Satellitennavigationssignalen am Ort ihres Empfangs vorgeschlagen, wobei bei dem Verfahren

- ein ein- oder mehrdimensionales Antennenarray mit mehreren Empfangsantennen bereitgestellt wird,
- von den Empfangsantennen empfangene Satellitennavigationssignale in einer Signalverarbeitungseinheit verarbeitet werden,
- auf eines der oder jedes der empfangenen Satellitennavigationssignale ein Eigenbeamformer angewendet und diesen beschreibende Parameter berechnet werden,
- die Parameter des Eigenbeamformers des einen Satellitennavigationssignals oder jedes Satellitennavigationssignals zu Zeitpunkten gemessen oder ermittelt werden, zu denen keine Störunterdrückung durchzuführen ist, wobei die Parameter so initialisiert werden, dass das von einer zuvor festgelegten Empfangsantenne des Antennenarrays empfangene Satellitennavigationssignal unverändert durchgelassen wird,
- die empfangenen Satellitennavigationssignale in der Signalverarbeitungseinheit mittels eines Raumfilters, d.h. mittels spatial filtering, wie z.B. durch ein Power Inversion (PI) Filter oder ein Projektionsfilter, einer Störunterdrückung unterzogen werden, nach deren Durchführung die Trägerphasen der Satellitennavigationssignale verfälscht sind,
- nach der Störunterdrückung mittels der Signalverarbeitungseinheit die Trägerphase mindestens eines der oder jedes der Satellitennavigationssignale durch Berechnung von Parametern aus dem dem jeweiligen Satellitennavigationssignal zugeordneten, aktuellen und den dem jeweiligen Satellitennavigationssignal zugeordneten, zeitlich vorangegangenen Eigenbeamformern verändert wird, so dass die durch die Störsignalunterdrückung entstehenden Verfälschungen der Trägerphasen korrigiert werden.

Mit dem erfindungsgemäßen Konzept wird die Verfälschung der Trägerphase durch die Anwendung eines Störunterdrückungsverfahrens dadurch behoben, dass pro empfangenem Satellitennavigationssignal auf dieses ein Eigenbeamformer angewendet wird bzw. für mindestens eines der empfangenen Satellitennavigationssignale so vorgegangen wird, und zwar zunächst dann, wenn keine Störunterdrückung durchgeführt werden muss. Erfolgt dann anschließend an die beispielsweise letztmalige Anwendung eines Eigenbeamformers ohne Störunterdrückung der Satellitennavigationssignale eine Störung der Satellitennavigationssignale, so kommt es zur Durchführung der Störunterdrückung, um anschließend oder auch gleichzeitig mit der Störunterdrückung anhand der sich dann ergebenden verfälschten Trägerphase und der zeitlich vorangegangenen Eigenbeamformern eine Korrektur der Trägerphase vorzunehmen. Mit anderen Worten also dient der Eigenbeamformer, der vor einer Störunterdrückung auf ein Satellitennavigationssignal angewendet worden ist, als Informationsquelle für die Beschreibung der Trägerphase vor Störunterdrückung. Unter der Voraussetzung, dass sich an der räumlichen Konstellation von Antennenarray und Satellit nichts geändert hat, kann dann durch Berechnung von Parametern aus dem aktuellen und den zeitlich vorangegangenen Eigenbeamformern die verfälschte Trägerphase verändert werden, so dass die durch die Störsignalunterdrückung entstehenden Verfälschungen der Trägerphase korrigiert werden.

Sollte sich die Konstellation von Antennenarray und Satellit während der Dauer der Störunterdrückung geändert haben, was der Normalfall sein wird, da die Satelliten sich während der Störunterdrückungsdauer weiterbewegen, kann auch dies berücksichtigt werden, da die Bahnkurven der Satelliten bekannt sind.

Die Störunterdrückung (zusammen mit den Eigenbeamformern) verändert also die (messbaren) Trägerphasen in den pro Satellitennavigationssignal zu berechnenden Summensignalen in Abhängigkeit von den Einfallsrichtungen. Diese Veränderung muss kompensiert werden. Die absolute Trägerphase im störungsfreien Zustand muss für das Verfahren nicht bekannt sein. Es muss nur eine (indirekte) Information über die Einfallsrichtung des Satellitensignals bekannt sein, damit diese Veränderung entsprechend ausgerechnet werden kann. Diese Information steckt in den Eigenbeamformern zu Zeitpunkten, zu denen keine Störunterdrückung durchgeführt wird.

Bei der Ausgestaltung der Eigenbeamformer ist auch ohne Störunterdrückung eine gewisse Gestaltungsmöglichkeit gelassen. Der Eigenbeamformers (als Vektor) ist nur bis auf einen komplexen Faktor bestimmbar. Um eine Positionsbestimmung aus den messbaren Phasenlagen der Summensignale zu ermöglichen, müssen die Eigenbeamformer aller Satelliten von gleicher Gestalt sein (z.B. Antenne 1 wird auf positiv reellwertig festgelegt).

Es werden die Parameter aus dem aktuellen und dem vorherigen Eigenbeamformer berechnet, jedoch erfolgt die hier angesprochene Veränderung der Trägerphase durch eine Manipulation des aktuellen Eigenbeamformers. Die vorangegangene Korrektur der Trägerphase steckt also bereits im letzten Eigenbeamformer und wird somit akkumuliert.

In einem Empfänger, der das erfindungsgemäße Verfahren ausführt, werden die pro Satelliten durch die Empfangsantenne empfangenen Eingangssignale (Satellitennavigationssignale) an zwei verschiedenen Stellen gemischt. Zunächst bei der Störsignalunterdrückung, welche die Signale so vermischt, dass das Störsignal ausgelöscht wird, und dann nochmals beim Beamforming, bei dem die bereits vermischten Signale nochmal mit jedem Satellitennavigationssignal individuell zusammengemischt werden, so dass das zu nutzende Satellitennavigationssignal möglichst verstärkt wird.

Der Signalpfad kann dementsprechend bei einer beispielhaften konkreten Realisierung der Erfindung wie folgt aussehen, wobei angenommen wird, dass N die Anzahl der Empfangsantennen des Antennenarrays ist, $M_i$ mit i = 1, 2, ... die einzelnen empfangenen Satellitennavigationssignale und $S_i$ mit e = 1, 2, ... das sich nach der Korrelation und dem Beamforming ergebende Summensignal für das Satellitennavigationssignal $M_i$ ist.

Die Antennen 1, 2, ..., N empfangen das Satellitensignal $M_1$, übertragen es durch die Antennenkanäle 1, 2, ..., N im Frontend. Anschließend erfolgt eine Analog-Digital-Wandlung (ADC) für jeden Kanal, um dann die Störsignalunterdrückung durchzuführen. Dabei wird jeder Kanal, d.h. das Signal jedes Kanals, mit dem PRN-Code des Satellitennavigationssignals $M_1$ korreliert. Nach jeder Korrelation erfolgt das Beamforming und anschließend wird das dem Satellitennavigationssignal $M_1$ zugeordnete Summensignal $S_1$ gebildet.

In gleicher Weise wird mit jedem weiteren empfangenen Satellitennavigationssignal $M_i$ verfahren, so dass man ein diesem Satellitennavigationssignal entsprechendes Summensignal $S_i$ erhält.

Insgesamt existieren also N * M Korrelatoren und in der Folge also auch $S_i$ verschiedene Summensignale nach

dem Beamforming mit der der Anzahl an empfangenen Satellitennavigationssignalen gleichenden Anzahl verschiedener Beamformer.

Findet also eine Störsignalunterdrückung statt, kann bereits in der Korrelation nicht mehr davon gesprochen werden, dass mit dem Antennensignal z.B. der Antenne 1 korreliert wird. Zu diesem Zeitpunkt enthält jeder der N Kanäle eine Mischung aus allen N Antennenkanälen, welche so vermischt wurden, dass das Störsignal möglichst ausgelöscht wird. Mathematisch also eine komplexe Linearkombination der Antennenkanäle. Die Korrelation mit jedem PRN Code findet weiterhin für jeweils N Kanäle statt. Nach der Störsignalunterdrückung werden also weiterhin N verschiedene Signalkanäle benötigt.

Bei der Erfindung wird also z.B. dergestalt vorgegangen, dass die jeweilige Störunterdrückung durch einen Satz von Signalverarbeitungsparametern zur Anwendung auf die störzuunterdrückenden Satellitennavigationssignale definiert wird, wobei sich dieser Parametersatz bei Veränderung von die Satellitennavigationssignale beeinflussenden Störungen, die aus Störsignalen in der Umgebung des Empfängers oder aufgrund von Infrastruktur in der Umgebung des Empfängers entstehen, verändert, und dass bei einer Änderung der Störung

- für das mindestens eine Satellitennavigationssignal oder für jedes Satellitennavigationssignal die Parameter eines neuen Eigenbeamformers berechnet werden, so dass sich die zuvor berechnete Phase des mindestens einen Satellitennavigationssignals oder jedes Satellitennavigationssignals bei Anwendung des betreffenden neuen Eigenbeamformers ergibt, und
- zur Kompensation der Änderung der durch den neuen Eigenbeamformer berechneten Phase des mindestens einen Satellitennavigationssignals oder jedes Satellitennavigationssignals, die aus dem geänderten Parametersatz der Störunterdrückung resultiert, die Parameter des betreffenden neuen Eigenbeamformers zur Korrektur der Phase durch ihre Verschiebung, d.h. durch Drehung der Phase weiter verändert werden.

Zur Definition des Empfangsort kann z.B. so vorgegangen werden, dass die Parameter jedes Eigenbeamformers komplexe Gewichtungen definieren, mit denen die jeweiligen, von den Empfangsantennen ausgegebenen Signale gewichtet werden, und dass als Referenzort des Antennenarrays, der den Ort des Empfangs repräsentiert, entweder eine der Empfangsantennen ausgewählt wird, wobei das Gewicht für diese Empfangsantenne positiv, reellwertig (z.B. 1) gewählt wird, oder eine Position innerhalb des Antennenarrays, die nicht mit einer der Empfangsantennen zusammenfällt, ausgewählt wird, wobei die Gewichte für die Empfangsantennen des Antennenarrays so gewählt werden, dass die Trägerphase des Summensignals (nach der Gewichtung) der Trägerphase des zum Eigenbeamformer gehörenden Satellitennavigationssignals an der besagten Position entspricht; also der Trägerphase an einer virtuellen Antenne an dieser Position. Anzumerken ist, dass die Gewichte der Eigenbeamformer komplexwertig sind. Wenn eine Empfangsantenne mit 1 gewichtet wird, ist hiermit also nicht gemeint, dass alle anderen Empfangsantennen das Gewicht 0 erhalten, sondern nur, dass das Signal der entsprechenden Empfangsantenne ohne Phasenveränderung durchgelassen wird. Wäre das Gewicht z.B. 1i (90°) oder 0,7 + 0,7i (45°), so würde die Phase um 90° bzw. 45° gedreht, d.h. verschoben werden.

In vorteilhafter Ausgestaltung der Erfindung kann bei dem Verfahren vorgesehen sein, dass die Parameter des Eigenbeamformers komplexwertige Gewichte definieren, mit denen die jeweiligen, von den Empfangsantennen ausgegebenen Signale gewichtet werden, und dass als Referenzposition entweder eine der Empfangsantennen ausgewählt wird, wobei das Gewicht für diese Empfangsantenne positiv, reellwertig (z.B. 1) gewählt wird oder eine Position innerhalb des Antennenarrays ausgewählt wird, die nicht mit einer der Empfangsantennen zusammenfällt, wobei die komplexwertigen Gewichte für die Empfangsantennen des Antennenarrays so gewählt werden, dass die Trägerhase eines resultierenden Summensignals nach der Gewichtung gleich der Trägerphase des dem Eigenbeamformer zugeordneten Satellitennavigationssignal ist, welches eine Antenne an der besagten Referenzposition des Antennenarrays erreichen würde.

In weiterer zweckmäßiger Ausgestaltung kann ferner vorgesehen sein, dass die Strahlformungsgewichte des Eigenbeamformers bei ungestörten Satellitennavigationssignalen initialisiert werden, indem das Satellitennavigationssignal an der Referenzposition unverändert durchgelassen wird, womit auf diese Referenzposition bezogen durch die Strahlformung kein richtungsabhängiger Trägerphasenfehler entsteht, wobei bei einer anschließenden Störunterdrückung der zu berechnende Eigenbeamformer auf Basis des vorherigen Eigenbeamformers mit dem Ziel angepasst wird, dass die Phase eines resultierenden Summensignals weiterhin gleich der Trägerphase des Satellitennavigationssignals an der Referenzposition ist.

Bei dem resultierenden Summensignal handelt es sich typischerweise um die Summe der komplexwertigen, gewichteten störunterdrückten Empfangsantennensignale, wobei diese störunterdrückten Empfangsantennensignale eine komplexwertige Linearkombination der einzelnen digitalisierten Empfangsantennensignale sind und aus den Eingangssignalen durch Anwendung der Störunterdrückung berechnet werden und wobei der Eigenbeamformer die komplexwertigen Gewichte der Summe definiert.

Bei dem erfindungsgemäßen Verfahren wird ein ein- oder mehrdimensionales (bspw. zwei- oder dreidimensionales) Antennenarray mit mehreren Empfangsantennen verwendet. Die Signale, die von den Empfangsantennen empfangen werden und an deren Ausgängen anliegen (Kanäle des Antennenarray) werden in einer Signalverarbeitungseinheit mit bspw. einem Signalprozessor verarbeitet. Zunächst wird die Störunterdrückung durchgeführt, wodurch die einzelnen Satellitennavigationssignale von dem Störsignal getrennt werden können. Durch diese Vorgehensweise geht leider die Information über die Phasen, mit denen die einzelnen Satellitennavigationssignale das Antennenarray erreichen, verloren; denn die Signale der einzelnen Empfangsantennen werden bei der Störunterdrückung gleichphasig gemacht. Dies muss nun wiederum bei der Berechnung von Eigenbeamformern ausgeglichen werden, wobei pro Satellitennavigationssignal ein Eigenbeamformer generiert/berechnet wird. Dabei wird der entstandene Phasenfehler nicht durch die Berechnung des Eigenbeamformers ausgeglichen, sondern durch einen Term, der wiederum als Phasendrehung bzw. Phasenverschiebung auf den Eigenbeamformer angewendet wird

Mit jeder Veränderung von Störungen der Satellitennavigationssignale, die aus der Umgebung oder einer Bewegung des Empfängers resultiert, ändert sich die Berechnung der Eigenbeamformer. In zeitlich aufeinanderfolgenden Abschnitten oder zu aufeinanderfolgenden Zeitpunkten wird jeweils die Störunterdrückung als auch jeder Eigenbeamformer neu berechnet. Bei diesem iterativen Prozess wird nun dergestalt verfahren, dass der zu einem Zeitpunkt x neu zu berechnende Eigenbeamformer so berechnet wird, dass die sich aus ihm ergebende Phase gegenüber der zuvor (nämlich zum Zeitpunkt x-1) berechneten Phase zunächst unverändert bleibt. Dabei wird die (temporäre) Phasenveränderung, die aus der Änderung der Störung (zwischen dem Zeitpunkt x-1 und x) und damit aus der neuberechneten Störunterdrückung resultiert, wieder rückgängig gemacht. Auch muss die (temporäre) Phasenveränderung, welche durch den neuen Wechsel der Störunterdrückung entsteht, kompensiert werden, was mittels einer Phasendrehung erfolgt, die auf die durch den neuen Eigenbeamformer berechnete Phase angewendet wird.

Das erfindungsgemäße Verfahren setzt einen Mehrantennenempfänger mit Störunterdrückung und anschließender Strahlformung mittels Eigenbeamformer voraus. Im ungestörten Fall initialisiert das Verfahren die Strahlformungs-Gewichte so, dass das Signal der Referenzantenne (ein vorher festgelegtes Element des Arrays) unverändert durchgelassen wird (komplexwertiges Gewicht = 1). Auf dieses Element bezogen entsteht bei diesem Vorgehen kein richtungsabhängiger Phasenfehler durch die Strahlformung. Ist ein Störsignal vorhanden, so wird der zu berechnende Eigenbeamformer auf Basis des vorherigen Eigenbeamformers mit dem Ziel angepasst, dass die Phase des resultierenden Summensignals (nach Anwendung des Eigenbeamformers) weiterhin der Phase des Signals an der Referenzantenne (vor Anwendung der Störunterdrückung) entspricht.

Nach der Erfindung wird also nach einer Störunterdrückung die Trägerphase verändert, so dass sichergestellt ist, dass die Trägerphase sich nach der Störunterdrückung so, wie es im ungestörten Fall ist, verhält. D.h., dass man eine Trägerphasenmessung, die sich im ungestörten Fall z.B. auf die Empfangsantenne 1 bezogen hat, dadurch auch im gestörten Fall auf die Empfangsantenne 1 beziehen kann. Die gemessene Trägerphase ändert sich jedoch zeitlich, da sich das Antennenarray unter der/die Satelliten relativ zueinander bewegen.

Die Anpassung wird erfindungsgemäß in einem zweistufigen Verfahren durchgeführt:

1. Die Parameter des neuen Eigenbeamformers werden im obigen Sinne an die des vorherigen Eigenbeamformers angepasst. Gleichzeitig wird die durch den vorhergehenden Wechsel der Störunterdrückung verursachte (temporäre) Phasenveränderung wieder rückgängig gemacht.

2. Die (temporäre) Phasenveränderung, welche durch den (neuen) Wechsel der Störunterdrückung entsteht, wird mittels auf den neuen Eigenbeamformer angewandte Phasendrehung kompensiert.

Das erfindungsgemäße Verfahren berechnet die Korrektur der verfälschten Trägerphasen in einem Mehrantennenempfänger aus dem aktuellen und dem letzten Eigenbeamformer sowie der aktuellen und der letzten Störunterdrückungsmatrix. Die Berechnung dafür erfolgt ohne Informationen über das benutze Antennenarray und damit also quasi "blind". Es wird ein zweistufiges Verfahren angewendet, welches die berechnete Phasenkorrektur direkt auf den verwendeten Strahlformer anwendet. Im Gegensatz zum Stand der Technik berechnet das erfindungsgemäße Verfahren nicht die räumliche Phasensignatur. Die Berechnung einer solchen wird durch Störsignale stark verfälscht. Das erfindungsgemäße Verfahren kann - im Gegensatz zu einem vergleichbaren Verfahren des Stands der Technik - auch in Empfängern eingesetzt werden, welche einen Projektionsfilter zur Störunterdrückung verwenden. Zudem kann das erfindungsgemäße Verfahren auch in Empfängern eingesetzt werden, in denen der Eigenbeamformer auf einem Datensatz berechnet und erst auf den nächsten Datensatz angewendet wird.

Gegenüber dem oben unter 1a erwähnten bekannten Verfahren hat die Erfindung den Vorteil, dass das Verfahren blind funktioniert, d.h. es benötigt keine Vermessung des Antennenarrays. Zudem ist keine Kenntnis über die Einfallsrichtungen der Signale erforderlich.

Gegenüber dem oben unter 1b erwähnten Verfahren muss nach der Erfindung die räumliche Phasensignatur nicht explizit berechnet werden. Statt einer Invertierung der Störunterdrückung muss lediglich die Änderung der Störunterdrückung berücksichtigt werden. Dies erlaubt den Einsatz des Verfahrens auch in Umgebungen mit starken Störsignalen. Des Weiteren wird so eine Drift der Phasenkorrektur deutlich reduziert.

Gegenüber dem oben unter 2 beschriebenen bekannten Verfahren hat die Erfindung den Vorteil, dass die Anordnung der Antennenelemente beliebig erfolgen kann. Auch leidet die Leistungsfähigkeit des erfindungsgemäßen Verfahrens nicht, wenn die Antennenelemente von dem Ideal einer isotropen Antenne abweichen.

Die Erfindung lässt sich beispielsweise zur Ermittlung des Abstandes eines Empfängers für Satellitennavigationssignale zu einem Satelliten einsetzen, wobei das zuvor beschriebene Verfahren zur Reduktion von Auswirkungen einer Störunterdrückung auf die Messung der Trägerphasen von Satellitennavigationssignalen am Ort ihres Empfangs durchgeführt wird und wobei anhand der berechneten Trägerphase des Satellitennavigationssignals der sogenannte Pseudo-Abstand des Empfängers zum Satelliten berechnet wird.

Die Erfindung lässt sich beispielsweise zur Bestimmung der Position eines Empfängers für Satellitennavigationssignale einsetzen, wobei das zuvor beschriebene Verfahren zur Reduktion von Auswirkungen einer Störunterdrückung auf die Messung der Trägerphasen von Satellitennavigationssignalen am Ort ihres Empfangs durchgeführt wird wobei anhand der Abstände des Empfängers zu mehreren Satelliten die Position des Empfängers ermittelt wird.

Mögliche gewerbliche Anwendungsgebiete sind GNSS-Empfänger, welche eine hohe Genauigkeit benötigen, GNSS-Referenzstationen und GBAS-Stationen.

Die Erfindung wird nachfolgend anhand eines Ausführungsbeispiels und unter Bezugnahme auf die Zeichnung näher erläutert. Im Einzelnen zeigen hierbei:

Fign. 1a und 1b      zeigen einen Messaufbau auf dem Dach des UMIC-Forschungszentrums der RWTH Aachen University. Die Antennengruppe vorne in Abb. 1a und hinten in Abb. 1b (DLR UNITAS) dient zum Empfang der Satellitensignale und die Antenne hinten in Abb. 1a und vorne in Abb. 1b zur Abstrahlung des Störsignals.

Fig. 2      zeigt eine Signalverfolgungsstruktur eines Mehrantennenempfängers mit N Antennenkanälen und der vorgeschlagenen Kompensationseinheit, wobei M die Anzahl der Satelliten ist.

Fig. 3      zeigt die Bewegung der Störantenne um die UNITAS-Antennengruppe in Szenario 2.

Fig. 4      zeigt die Potenz der Eigenwerte der vom Empfänger geschätzten Präkorrelations-Kovarianzmatrix.

Fig. 5      zeigt Szenario 1: Residuen der Trägerphase über die UTC-Zeit.

Fig. 6      zeigt Szenario 1: Positionsabweichung über die Zeit.

Fig. 7      zeigt Szenario 2: Beweglicher Störsender mit konstantem Leistungspegel.

Fig. 8      zeigt Szenario 2: Positionsabweichung über die Zeit.

Globale Navigationssatellitensysteme (GNSS) werden häufig zur Positionsbestimmung und Zeitmessung eingesetzt. Die Systeme werden von fast allen Land-, Luft- und Wasserfahrzeugen genutzt, um zu navigieren. Mit der zunehmenden Zahl privater und kommerzieller Drohnen und dem Aufkommen autonom fahrender Fahrzeuge wird die Zahl der Systeme, die auf GNSS angewiesen sind, noch weiter steigen. Daher wird es immer wichtiger, die Verfügbarkeit und Integrität der Positions-, Geschwindigkeits- und Zeitlösung (PVT) auch bei Interferenzen, Störungen oder sogar Spoofing zu gewährleisten. Außerdem erfordern die neuen Anwendungen eine höhere Präzision der PVT-Lösung. Diese Forderung kann durch die Techniken der präzisen Punktpositionierung (PPP) und der Echtzeitkinematik (RTK) erfüllt werden. Ein Schlüsselelement dieser Verfahren ist die Einbeziehung von Trägerphasenmessungen in die PVT-Schätzung. Die Trägerphasenmessungen ermöglichen sehr viel genauere Entfernungsmessungen, da die Wellenlänge eines GNSS-Trägers, z. B. 19 cm bei GPS L1, viel kleiner ist als die entsprechende Länge eines PRN-Code-Chips bei der Ausbreitung im freien Raum, z. B. 293 m beim C/A-Code von GPS L1.

Ein fortschrittlicher Ansatz für den Schutz gegen Jamming und Spoofing besteht in der Verwendung von adaptiven Antennengruppen und der Nutzung von Signalverarbeitung im räumlichen Bereich. Die Antennengruppen können zur Erkennung und Eindämmung von Störsendern [1] und Spoofern [2], [3] eingesetzt werden. Darüber hinaus ermöglicht ein Antennen-Array die Erhöhung des C/N0-Wertes eines Satellitensignals, indem ein Strahl in die Ankunftsrichtung (DoA) gelenkt wird. Die Entschärfung erfolgt in der Regel durch räumliche Filter wie den Power Inversion (PI) Filter oder das Minimum Varianz Distortionless Response (MVDR) Filter. Diese Filter können in deterministische und blinde Ansätze unterteilt werden. Bei einem deterministischen Ansatz muss der Steuerungsvektor des ankommenden Satellitensignals bekannt sein. Der Lenkungsvektor eines auftreffenden Signals ist seine räumliche Signatur, die die Phaseninformation des Signals an jedem Antennenelement enthält. Um den Lenkungsvektor zu erhalten, muss das Empfangsmuster der Antenne bekannt sein. In der Praxis wird häufig ein blinder Ansatz gewünscht. Ein blinder Ansatz funktioniert ohne vorherige Kenntnis der Antennengewinn-/Phasenmatrix, der Kalibrierungsmatrix und der Ankunftsrichtung der Störung. Gängige Implementierungen von blinden Raumfiltern und Strahlformern induzieren jedoch einen Fehler in die Trägerphasenmessungen.

Das Problem des induzierten Fehlers bei Trägerphasenmessungen wurde bereits von anderen Forschern behandelt. In der Literatur finden sich zwei verschiedene Strategien zur Abschwächung des Phasenfehlers, der durch blinde räumliche Filterung entsteht: Eine Strategie zielt darauf ab, die Kontinuität der Phasenmessung in gestörten Szenarien zu bewahren. Jia et al. [4] haben dafür einen solchen Algorithmus vorgestellt, der für Kurzzeitszenarien gut funktioniert. Allerdings haben Jia et al. den vorgeschlagenen Algorithmus nicht mit aufgezeichneten Real-Word-Signalen validiert und die Auswirkungen der aufgetretenen Phasenfehler auf die Positionierungslösung nicht bewertet. Insbesondere die Stabilität der Trägerphasenmessungen über kurze Zeiträume hinaus ist problematisch. Weitere Untersuchungen zeigen, dass Ansätze, die diese Strategie anwenden, im Allgemeinen die Kontinuität der Phase über lange Zeiträume nicht bewahren können [5]. Die zweite Strategie basiert auf der Verwendung zusätzlicher Einschränkungen für das Raumfilter, um Phasenfehler zu vermeiden. Dieser Ansatz wurde von Daneshmand et al. [6] sowohl in Simulationen als auch mit aufgezeichneten Signalen demonstriert, wobei seine Vorteile gegenüber einer Standardimplementierung deutlich wurden. Allerdings reduzieren die zusätzlichen Einschränkungen die Freiheitsgrade des Raumfilters um die Hälfte. Daher bräuchte eine Antennengruppe die doppelte Anzahl von Antennenelementen, um die gleiche Anzahl von Störsendern zu unterdrücken wie die Standardimplementierung. Außerdem funktioniert der Algorithmus nur mit zentrosymmetrischen Gruppengeometrien, d.h. er ist nicht direkt auf reale Antennengruppen anwendbar, ohne dass es aufgrund von Asymmetrien in den Antenneneigenschaften, die durch Unvollkommenheiten, Toleranzen, Einflüsse von Objekten im Nahfeld oder Installationsprobleme verursacht werden, zu erheblichen Leistungseinbußen kommt.

Die oben erwähnten Einschränkungen des Stands der Technik waren der Grund für die in [7] und [5] beschriebenen Forschungsarbeiten. In [7] wurde der induzierte Trägerphasenfehler für vier verschiedene Implementierungen eines Raumfilters bewertet. Die Analyse wurde in drei verschiedenen Szenarien durchgeführt, um den Fehler sowohl in Abwesenheit als auch in Anwesenheit eines Störsignals zu charakterisieren. Darüber hinaus wurde der Einfluss der Antenne unter Verwendung einer isotropen Antenne und eines simulierten Antennen-Array-Diagramms bewertet. Die Ergebnisse zeigen, dass das MVDR-Filter den geringsten Phasenfehler hervorruft. Es kann gezeigt werden, dass dieses Filter theoretisch sogar frei von Trägerphasenverzerrungen ist [4]. Bei den durchgeführten Simulationen wurde davon ausgegangen, dass der Ansatz über ungenaue Kenntnisse verfügt. Es handelt sich jedoch immer noch um einen deterministischen Ansatz, der a priori Wissen benötigt. Die drei übrigen Ansätze in [7] sind blind. Bei diesen Ansätzen hängt die Trägerphasenverzerrung von der DoA des Satelliten und der DoA des Störsignals ab. Ein Ansatz bestand darin, die eingehenden Signale nach der Unterdrückung der Störung zu summieren, d.h. ein Beamforming zu verwenden, bei dem in jeder Zeile eine Eins steht. Dieser Ansatz führt nur zu einer geringen Phasenverzerrung, unterdrückt aber Satellitensignale in geringer Höhe. Dennoch bleibt PPP/RTK auch mit diesen Ansätzen eine Herausforderung in sich schnell verändernden Umgebungen. In [5] wurden diese Ergebnisse genutzt, um zwei neue blinde Ansätze zur Reduzierung des Trägerphasenfehlers bei der räumlichen Filterung zu entwickeln. Der Grundgedanke dieser Ansätze besteht darin, die Verzerrung der verfolgten Trägerphase zu reduzieren, indem die mittlere Phase des angewandten Strahlformers entweder mit dem vorherigen Strahlformer oder mit dem Strahlformer des oben genannten Ansatzes verglichen wird, von dem bekannt ist, dass er die Phase kaum beeinflusst. Die Verringerung des Trägerphasenfehlers durch diese Ansätze ist vielversprechend, aber die Bewertung beschränkte sich auf numerische Simulationen mit synthetischen Satellitensignalen. Die Ansätze wurden nicht mit realistischen Signaldaten getestet, und darüber hinaus wurde die Auswirkung des Phasenfehlers auf die Positionierungslösung nicht untersucht.

Mit der vorgeschlagenen Erfindung werden die Forschungsarbeiten aus [7] und [5] auf praktische Experimente mit aufgezeichneten realistischen Signalen und unter Verwendung eines RTK-Positionierungsalgorithmus erweitert. Die Analyse in [7] und [5] konzentrierte sich auf den Trägerphasenversatz, der durch die adaptive räumliche Filterung auf der Signalebene verursacht wird. Die vorgeschlagene Erfindung untersucht die daraus resultierende Auswirkung eines solchen Fehlers auf die RTK-Positionierungslösung. Zu diesem Zweck werden GNSS-Signale aus realistischen Szenarien von einem Software-definierten Funksystem (SDR) aufgezeichnet und von einem Softwareempfänger verarbeitet. Die Observablen des Empfängers werden dann an die RTKlib [8], ein Open-Source-Programmpaket für GNSS-Positionierung, weitergegeben, um eine RTK-Positionslösung zu erhalten und die induzierten Fehler im Positionierungsbereich zu bewerten. Die Filterung und Mittelwertbildung der Trägerphasenfehler, die in den Trägerverfolgungsschleifen des Empfängers stattfinden, werden bei diesem Ansatz von Natur aus berücksichtigt. Die Leistung der Trägerphasenmessungen (Trägerbereich) und der Positionierungslösung wird in verschiedenen Szenarien analysiert, die von störungsfreien bis hin zu bewegten Störsendern reichen. Die Szenarien werden mit den klassischen Implementierungen der räumlichen Filterung und dem in [5] vorgeschlagenen Ansatz bearbeitet. Die Beschreibung schließt mit einer Empfehlung, welcher Ansatz für die RTK-Positionierung geeignet ist, um eine räumliche Filterung von Interferenz-, Mehrwege- oder Spoofing-Signalen durchzuführen. Mit Hilfe der erzielten Ergebnisse zielt die Erfindung darauf ab, die Lücke bei der Verwendung von GNSS-Antennengruppenempfängern mit RTK-Positionierungstechniken zu schließen, insbesondere unter Berücksichtigung der Einschränkungen, die sich aus den Unzulänglichkeiten der realen Welt ergeben. Sie wird den Weg für den Einsatz von GNSS-Gruppenempfängern in Anwendungen ebnen, die eine Kombination aus hoher Positionierungsgenauigkeit und hoher Ausfallsicherheit erfordern.

ANMERKUNG

In dieser Beschreibung wird die folgende Notation verwendet:

- kleine fette Buchstaben stehen für Vektoren
- große fette Buchstaben stehen für Matrizen
- die Symbole $-^T$ und $-^H$ stehen für die Transponierung bzw. die hermitesche Transponierung
- arg{·} steht für den Winkel einer komplexen Zahl
- E[·] und var[·] stehen für den statistischen Erwartungswert bzw. die Varianz

SYSTEMMODELL UND RÄUMLICHE SIGNALVERARBEITUNG

In diesem Abschnitt werden das Signalmodell und der theoretische Hintergrund für die räumlichen Filter und den Strahlformer vorgestellt.

Signalmodell

Wir gehen von einem Antennen-Array mit $N$ Antennen aus. Diese Gruppe empfängt $M$ Satelliten- und $L$ Störsignale. Das auftreffende Signal lautet:

$$\mathbb{C}^{N \times 1} \ni \mathbf{x}(t) = \sum_{m=1}^{M} \mathbf{C}\mathbf{a}_m s_m(t) + \sum_{l=1}^{L} \mathbf{C}\mathbf{a}_l j_l(t) + \mathbf{n} \qquad (1)$$

$$= \mathbf{s} \qquad\qquad + \mathbf{j} \qquad\qquad + \mathbf{n} \qquad (2)$$

$\mathbf{a}_m \in C^{N \times 1}$ und $\mathbf{a}_l \in C^{N \times 1}$ beschreiben die Steuerungsvektoren des Satelliten bzw. der Störsignale. Ein Lenkungsvektor ist die räumliche Signatur eines Signals und hängt von der Ankunftsrichtung (DoA) des auftreffenden Signals und der Ausrichtung der Antennengruppe ab. Für eine vereinfachte, isotrope Antennengruppe beschreibt

$$\mathbf{a} = \left( e^{-1}, \ldots, e^{-i\mathbf{k}^T\mathbf{r}_N} \right)$$

den Steuerungsvektor einer auftreffenden Welle. $\mathbf{k}$ ist der Wellenvektor und $\mathbf{r}1,...,\mathbf{r}N$ beschreiben die räumlichen Positionen der Antennenelemente. In der Praxis weicht der Steuerungsvektor (in Phase und Amplitude) von diesem vereinfachten Modell ab, da die Antennenelemente der Arrays in der Regel nicht isotrop oder sogar nicht azimutal invariant sind, was auf die elektromagnetische Kopplung der Arrayelemente zurückzuführen ist. Auch einige andere praktische Effekte wie Fertigungstoleranzen und das Vorhandensein anderer Objekte im Nahfeld führen dazu, dass die Antennendiagramme eines installierten Arrays von den mit Antennenmodellierungswerkzeugen berechneten oder in einer schalltoten Kammer gemessenen Diagrammen abweichen. In Gleichung (1) werden einige dieser Effekte durch den Term $\mathbf{C}$ berücksichtigt. Diese Matrix modelliert unterschiedliche Kabellängen und Komponententoleranzen in den $N$ Antennenverarbeitungskanälen sowie das Übersprechen zwischen verschiedenen Kanälen. Sie ist für alle ankommenden Signale gleich und wird insbesondere nicht durch den DoA eines Signals beeinflusst. Ihr Kehrwert $\mathbf{C}^{-1}$ wird als Kalibrierungsmatrix bezeichnet.

An dieser Stelle soll betont werden, dass der Steuerungsvektor auch von der Wahl des Referenzkoordinatensystems abhängt. Der Ursprungspunkt dieses Bezugssystems ist der räumliche Bezug für das modellierte Signal $s_m(t)$ und $j(t)$. Wenn nicht anders angegeben, ist der Ursprungspunkt das Zentrum der Antennengruppe, das als Mittelwert aller Antennenpositionen bestimmt wird. $s_m(t)$ beschreibt das Satellitensignal. Es enthält die Datenbits, den Spreizcode und das Trägersignal. $j_l$ steht für das Störsignal und $\mathbf{n} \in C^{N \times 1}$ steht für den additiven Rauschanteil. Es wird als Gaußsches Rauschen mit Mittelwert Null und einer Varianz von $\sigma_{\mathbf{n}}^2$ modelliert.

Räumliches Filter und Beamformer

Die Kombination der empfangenen Antennensignale bietet die Möglichkeit, verschiedene DoAs zu verstärken oder zu unterdrücken. Dazu werden die empfangenen Signale mit einer komplexen Zahl (Phasen- und Amplitudenänderung) multipliziert und aufsummiert. Das strahlgeformte Signal kann ausgedrückt werden als

$$y = \mathbf{w}^H\mathbf{x}. \qquad (3)$$

Der Gewichtsvektor $\mathbf{w}$ wird durch die Bedürfnisse des Nutzers definiert. Eine gängige Methode zur Unterdrückung unerwünschter Signale ist die Verwendung des Minimum-Varianz-Filters (MV), das die Varianz der unerwünschten Signale im Ausgangssignal minimiert. Unter der Annahme, dass die unerwünschten Signale einen Mittelwert von Null haben und mit dem Satellitensignal unkorreliert sind, können wir schreiben:

$$\min_{\mathbf{w}} \mathrm{var}\left[\mathbf{w}^{\mathrm{H}}\left(\mathbf{j}+\mathbf{n}\right)\right] = \mathbb{E}\left[\left|\mathbf{w}^{\mathrm{H}}\left(\mathbf{j}+\mathbf{n}\right)\right|^{2}\right] = \mathbf{w}^{\mathrm{H}}\mathbb{E}\left[\left(\mathbf{j}+\mathbf{n}\right)\left(\mathbf{j}+\mathbf{n}\right)^{\mathrm{H}}\right]\mathbf{w} = \mathbf{w}^{\mathrm{H}}\mathbf{R}_{\mathbf{j}+\mathbf{n}}\mathbf{w} \tag{4}$$

$\mathbf{R}_{\mathbf{j}+\mathbf{n}}$ ist die Kovarianzmatrix des unerwünschten Signals und des Rauschens. Um die triviale Lösung $\mathbf{w} = \mathbf{0}$ auszuschließen, muss eine weitere Bedingung hinzugefügt werden. Die zusätzliche Bedingung $\mathbf{w}^{\mathrm{H}}\mathbf{a}_m = 1$ ergibt das MVDR-Filter. Die Lösung für diesen Filter ist gegeben durch:

$$\mathbf{w}_{\mathrm{MVDR}} = \frac{\mathbf{R}_{\mathbf{j}+\mathbf{n}}^{-1}\mathbf{a}_m}{\mathbf{a}_m^{\mathrm{H}}\mathbf{R}_{\mathbf{j}+\mathbf{n}}^{-1}\mathbf{a}_m} \tag{5}$$

Die GNSS-Satellitensignale liegen weit unter dem Grundrauschen. Daher kann die Kovarianzmatrix des unerwünschten Signals ohne Vorkenntnisse approximiert werden durch:

$$\tilde{\mathbf{R}}_{\mathbf{j}+\mathbf{n}} = \frac{1}{K}\sum_{k=1}^{K}\mathbf{x}[k]\mathbf{x}[k]^{\mathrm{H}}, \tag{6}$$

wobei K die Anzahl der verwendeten Abtastwerte beschreibt und $\mathbf{x}[k]$ die gelesenen Abtastwerte zum Zeitpunkt $t_k = kT$ mit dem Abtastintervall $T$ darstellt.

Die Schätzung des Steuerungsvektors für das gewünschte Satellitensignal ist schwieriger: Wenn das Empfangsmuster des Empfängersystems, die Lage und die Position der Antennengruppe bekannt sind, können der DoA und der Steuerungsvektor des auftreffenden Signals anhand der Ephemeridendaten berechnet werden. Dieser Ansatz wird als deterministisches Filter eingestuft. In der Praxis ist dieser Ansatz aufgrund der zeitlichen Änderung der benötigten Informationen recht anspruchsvoll. Ein vielversprechender Versuch, die zeitlich veränderlichen Komponenten gemeinsam zu schätzen, wird von Zorn in [9] und [10] beschrieben.

Eigenstrahlformer

Eine weitere Möglichkeit zur Schätzung des Lenkungsvektors besteht darin, ihn nach der Entstreuung/Korrelation zu schätzen. Durch die Korrelation wird das Nutzsignal über das Grundrauschen hinaus verstärkt, so dass es möglich ist, seine räumliche Signatur zu extrahieren.

Dieser Ansatz kann sogar bei Vorhandensein eines Störsignals verwendet werden, das das Satellitensignal überlagert. Um starke Störungen zu unterdrücken, wird vor der Korrelation ein Raumfilter $\mathbf{P} = \mathbf{R}_{\mathbf{j}+\mathbf{n}}^{-\frac{1}{2}}$ angewendet. Dieser Vorgang wird als Prewhitening bezeichnet. Das gefilterte Signal lautet:

$$\bar{\mathbf{x}}(t) = \mathbf{P}\mathbf{x}(t) = \mathbf{P}\mathbf{s} + \mathbf{P}\mathbf{j} + \mathbf{P}\mathbf{n} \tag{7}$$

Das Signal nach der Korrelation kann ausgedrückt werden als:

$$\mathbf{y}_m = G_m\mathbf{P}\mathbf{C}\mathbf{a}_m + \mathbf{n}_{\mathrm{pc},m} \tag{8}$$

wobei der Faktor $G_m$ die Skalierung der Korrelation mit der lokalen Replik darstellt und $\mathbf{n}_{\mathrm{pc},m}$ das Rauschen nach dem Korrelationsprozess ist. Dieses Rauschen enthält sowohl die anderen Satelliten als auch die unterdrückten Störsender und das Vorkorrelationsrauschen.

Die Nachkorrelations-Kovarianzmatrix für Satellit $m$ lautet:

$$\mathbf{R}_{\mathbf{y}_m} = \mathbb{E}\left[\mathbf{y}_m\mathbf{y}_m^{\mathrm{H}}\right] \tag{9}$$

Berechnet man die Eigenwertzerlegung und nimmt den Eigenvektor, der zum stärksten Eigenwert gehört, so erhält man den folgenden Vektor:

$$\mathbf{b}_m = \left(\alpha_m\, e^{i\,\phi_m}\right)\mathbf{PCa}_m + \mathbf{e}_m \tag{10}$$

Eigenvektoren sind nur auf einen Skalenfaktor festgelegt, der in Gleichung (10) durch den komplexen Term $(\alpha_m e^{i\phi m})$ dargestellt wird. Normalerweise wird der Eigenvektor so skaliert, dass er eine Norm von eins hat. Der Phasenfaktor ($e^{i\phi m}$) ist jedoch immer noch willkürlich. Der Term $\mathbf{e}_m$ steht für die Fehler bei der Schätzung des Steuerungsvektors.

Aufgrund der Verwendung des Eigenvektors wird dieser Beamformer als Eigenbeamformer bezeichnet. Der Ansatz benötigt keine Informationen über die Antennengruppe und wird daher als Blindfilter eingestuft. Der Eigenbeamformer wird in [11] und [4] ausführlicher beschrieben. Der Gewichtungsvektor für das eingeschränkten MV-Filter mit einem Eigenbeamformer ist gegeben durch:

$$\mathbf{w}_{\mathrm{MVEig}} = \frac{\mathbf{P}^{\mathrm{H}}\mathbf{b}_m}{\mathbf{b}_m{}^{\mathrm{H}}\mathbf{P}^{\mathrm{H}}\mathbf{Pb}_m} \tag{11}$$

PHASENFEHLER- UND PHASENKOMPENSATIONSMECHANISMEN

Der zuvor beschriebene Beamformer unterdrückt unerwünschte Störsignale und verstärkt ein erwünschtes Satellitensignal. Dies geschieht durch die Summierung der phasenverschobenen Signale. Das resultierende Summensignal wird dann an die PLL/DLL weitergeleitet, die für die Pseudoentfernungs- und Trägerphasenmessungen verwendet werden. In diesem Abschnitt wird der Einfluss des beschriebenen Eigenbeamformers auf die Trägerphase analysiert. Außerdem werden zwei Methoden zur Verringerung dieses Effekts vorgestellt.

Phasenfehler

Mathematisch kann das Beamforming durch die Kombination der Gleichungen (3) und (1) beschrieben werden:

$$y = \mathbf{w}^{\mathrm{H}}\mathbf{x} = \sum_{m=1}^{M}\mathbf{w}^{\mathrm{H}}\mathbf{Ca}_m s_m(t) + \sum_{l=1}^{L}\mathbf{w}^{\mathrm{H}}\mathbf{Ca}_l j_l + \mathbf{w}^{\mathrm{H}}\mathbf{n}. \tag{12}$$

Die durch die räumliche Signalverarbeitung induzierte Phasenverschiebung eines einzelnen Satellitensignals $s_m$ kann als die Phase des Produkts aus dem Gewichtungsvektor, der inversen Kalibrierungsmatrix und dem wahren Steuerungsvektor dieses speziellen Satelliten beschrieben werden:

$$\Delta\varphi_m = \arg\{\mathbf{w}^{\mathrm{H}}\mathbf{Ca}_m\}. \tag{13}$$

Die induzierte Phasenverschiebung des MVEig-Beamformers kann berechnet werden. Mit Gleichung (11) ergibt sich Gleichung (13):

$$\Delta\varphi_{\mathrm{MVEig},m} = \arg\left\{\mathbf{w}_{\mathrm{MVEig}}{}^{\mathrm{H}}\mathbf{Ca}_m\right\} \tag{14}$$

$$= \arg\left\{\frac{\mathbf{b}_m{}^{\mathrm{H}}\mathbf{PCa}_m}{\mathbf{b}_m{}^{\mathrm{H}}\mathbf{P}^{\mathrm{H}}\mathbf{Pb}_m}\right\} \tag{15}$$

$$= \arg\left\{\mathbf{b}_m{}^{\mathrm{H}}\mathbf{PCa}_m\right\} \tag{16}$$

Aus technischen Gründen wird der Eigenbeamformer normalerweise aus Stichproben der vorhergehenden Iteration geschätzt, während das Raumfilter in derselben Iteration angewendet wird, in der er erzeugt wurde. Um dies zu berücksichtigen, fügen wir einen Index hinzu, der die Zeitabhängigkeit anzeigt: h bzw. *h-1* (z. B. $\mathbf{a}_h$ und $\mathbf{a}_{h-1}$). Um die Lesbarkeit zu erhalten, geben wir die Satellitenabhängigkeit nicht mehr an, d.h. wir zeigen den Index m nicht mehr an. Mit diesen Anpassungen und mit Gleichung (10) lautet Gleichung (16):

$$\Delta\varphi_{\text{MVEig}} = \arg\left\{\left[\left(\alpha_{h-1}\,e^{i\,\phi_{h-1}}\right)\mathbf{P}_{h-1}\mathbf{C}_{h-1}\mathbf{a}_{h-1} + \mathbf{e}_{h-1}\right]^{\text{H}}\mathbf{P}_h\mathbf{C}_h\mathbf{a}_h\right\} \tag{17}$$

$$= \arg\left\{\left(\alpha_{h-1}\,e^{-i\,\phi_{h-1}}\right)\mathbf{a}_{h-1}^{\text{H}}\mathbf{C}_{h-1}^{\text{H}}\mathbf{P}_{h-1}^{\text{H}}\mathbf{P}_h\mathbf{C}_h\mathbf{a}_h + \mathbf{e}_{h-1}^{\text{H}}\mathbf{P}_h\mathbf{C}_h\mathbf{a}_h\right\} \tag{18}$$

$$= -\phi_{h-1} + \arg\left\{\mathbf{a}_{h-1}^{\text{H}}\mathbf{C}_{h-1}^{\text{H}}\mathbf{P}_{h-1}^{\text{H}}\mathbf{P}_h\mathbf{C}_h\mathbf{a}_h\right\} + \arg\left\{1 + \frac{\mathbf{e}_{h-1}^{\text{H}}\mathbf{P}_h\mathbf{C}_h\mathbf{a}_h}{\left(\alpha_{h-1}\,e^{-i\,\phi_{h-1}}\right)\mathbf{a}_{h-1}^{\text{H}}\mathbf{C}_{h-1}^{\text{H}}\mathbf{P}_{h-1}^{\text{H}}\mathbf{P}_h\mathbf{C}_h\mathbf{a}_h}\right\} \tag{19}$$

Kompensation

Um zu verhindern, dass die räumliche Signalverarbeitung die Entfernungsmessungen beeinträchtigt, muss der Phasenfehler gleich Null sein, d.h. $\Delta\varphi_{\text{MVEig}} = 0^!$. Der vorgeschlagene Kompensationsalgorithmus zielt darauf ab, einen Phasensprung bei zwei aufeinanderfolgenden Schätzungen des Strahlformers oder des Raumfilters zu verhindern. Die Kompensation erfolgt durch Änderung der Phase des geschätzten Eigenstrahlformers (10), bevor dieser im Strahlformungsprozess verwendet wird. Mathematisch gesehen lautet der Gewichtungsvektor nach der Kompensation für den Satelliten $m$:

$$\hat{\mathbf{w}}_{\text{MVEig},m} = e^{i\,\varphi_{\text{Comp},m}}\,\frac{\mathbf{P}^{\text{H}}\mathbf{b}_m}{\mathbf{b}_m^{\text{H}}\mathbf{P}^{\text{H}}\mathbf{P}\mathbf{b}_m} \tag{20}$$

mit der Kompensationsphase $\varphi_{\text{Comp}}$.

Die Kompensationsphase wird in zwei Schritten geschätzt. Der erste Schritt wird durch die Multiplikation von zwei aufeinanderfolgenden Eigenstrahlformern definiert:

$$\varphi_{c1} := \arg\left\{\mathbf{b}_h^{\text{H}}\mathbf{b}_{h-1}\right\} \tag{21}$$

$$= \arg\left\{\left[\left(\alpha_{h-1}\,e^{i\,\phi_{h-1}}\right)\mathbf{P}_{h-1}\mathbf{C}_{h-1}\mathbf{a}_{h-1} + \mathbf{e}_{h-1}\right]^{\text{H}}\left[\left(\alpha_{h-2}\,e^{i\,\phi_{h-2}}\right)\mathbf{P}_{h-2}\mathbf{C}_{h-2}\mathbf{a}_{h-2} + \mathbf{e}_{h-2}\right]\right\} \tag{22}$$

$$= -\phi_{h-1} + \phi_{h-2} + \arg\left\{\mathbf{a}_{h-1}^{\text{H}}\mathbf{C}_{h-1}^{\text{H}}\mathbf{P}_{h-1}^{\text{H}}\mathbf{P}_{h-2}\mathbf{C}_{h-2}\mathbf{a}_{h-2}\right\} \tag{23}$$

$$+ \arg\left\{1 + \frac{\mathbf{e}_{h-1}^{\text{H}}\mathbf{e}_{h-2} + \left(\alpha_{h-2}\,e^{i\,\phi_{h-2}}\right)\mathbf{e}_{h-1}^{\text{H}}\mathbf{P}_{h-2}\mathbf{C}_{h-2}\mathbf{a}_{h-2} + \left(\alpha_{h-1}\,e^{-i\,\phi_{h-1}}\right)\mathbf{a}_{h-1}^{\text{H}}\mathbf{C}_{h-1}^{\text{H}}\mathbf{P}_{h-1}^{\text{H}}\mathbf{e}_{h-2}}{\left(\alpha_{h-1}\,e^{-i\,\phi_{h-1}}\right)\left(\alpha_{h-2}\,e^{i\,\phi_{h-2}}\right)\mathbf{a}_{h-1}^{\text{H}}\mathbf{C}_{h-1}^{\text{H}}\mathbf{P}_{h-1}^{\text{H}}\mathbf{P}_{h-2}\mathbf{C}_{h-2}\mathbf{a}_{h-2}}\right\} \tag{24}$$

Der zweite Schritt berücksichtigt die sich ändernde Prewhitening-Matrix. Sie ist definiert durch

$$\varphi_{c2} := \arg\left\{\mathbf{b}_h^{\text{H}}\mathbf{P}_h\mathbf{P}_{h-1}^{-1}\mathbf{b}_h\right\} \tag{25}$$

$$= \arg\left\{\left[\left(\alpha_{h-1}\,e^{i\,\phi_{h-1}}\right)\mathbf{P}_{h-1}\mathbf{C}_{h-1}\mathbf{a}_{h-1} + \mathbf{e}_{h-1}\right]^{\text{H}}\mathbf{P}_h\mathbf{P}_{h-1}^{-1}\left[\left(\alpha_{h-1}\,e^{i\,\phi_{h-1}}\right)\mathbf{P}_{h-1}\mathbf{C}_{h-1}\mathbf{a}_{h-1} + \mathbf{e}_{h-1}\right]\right\} \tag{26}$$

$$= \arg\left\{\mathbf{a}_{h-1}^{\text{H}}\mathbf{C}_{h-1}^{\text{H}}\mathbf{P}_{h-1}^{\text{H}}\mathbf{P}_h\mathbf{C}_{h-1}\mathbf{a}_{h-1}\right\} \tag{27}$$

$$+ \arg\left\{1 + \frac{\|\mathbf{e}_{h-1}\|^2 + \left(\alpha_{h-1}\,e^{i\,\phi_{h-1}}\right)\mathbf{e}_{h-1}^{\text{H}}\mathbf{P}_h\mathbf{C}_{h-1}\mathbf{a}_{h-1} + \left(\alpha_{h-1}\,e^{-i\,\phi_{h-1}}\right)\mathbf{a}_{h-1}^{\text{H}}\mathbf{C}_{h-1}^{\text{H}}\mathbf{P}_{h-1}^{\text{H}}\mathbf{P}_h\mathbf{P}_{h-1}^{-1}\mathbf{e}_{h-1}}{\alpha_{h-1}\alpha_{h-1}\mathbf{a}_{h-1}^{\text{H}}\mathbf{C}_{h-1}^{\text{H}}\mathbf{P}_{h-1}^{\text{H}}\mathbf{P}_h\mathbf{C}_{h-1}\mathbf{a}_{h-2}}\right\} \tag{28}$$

Wir gehen von Folgendem aus:

1) Die Kalibrierungsmatrix und der Steuerungsvektor ändern sich über drei Iterationen nicht wesentlich, d.h. $\mathbf{a}_h = \mathbf{a}_{h-1} = \mathbf{a}_{h-2}$ und $\mathbf{C}_h = \mathbf{C}_{h-1} = \mathbf{C}_{h-2}$. Dies kann angenommen werden, wenn das Intervall zwischen den Iterationen klein ist im Vergleich zur Bewegung der Satelliten und des Empfängers. Wenn der Empfänger stationär ist oder sich langsam bewegt, ist ein vernünftiges Intervall für die Iterationen 50ms.

2) Der Fehler bei der Schätzung des Eigenbeamformers ist verschwindend klein, d.h. $\|\mathbf{e}\| \ll \|\mathbf{a}\|$.

Mit diesen Postulaten ergibt sich die Phasenkompensation zu:

$$\varphi_{\text{Comp}} = \varphi_{c1} + \varphi_{c2} \tag{29}$$

$$\approx -\phi_{h-1} + \phi_{h-2} + \arg\left\{\mathbf{a}_{h-1}^{\text{H}}\mathbf{C}_{h-1}^{\text{H}}\mathbf{P}_{h-1}^{\text{H}}\mathbf{P}_{h-2}\mathbf{C}_{h-2}\mathbf{a}_{h-2}\right\} + \arg\left\{\mathbf{a}_{h-1}^{\text{H}}\mathbf{C}_{h-1}^{\text{H}}\mathbf{P}_{h-1}^{\text{H}}\mathbf{P}_{h}\mathbf{C}_{h-1}\mathbf{a}_{h-1}\right\} \tag{30}$$

$$\approx -\phi_{h-1} + \phi_{h-2} - \arg\left\{\mathbf{a}_{h-2}^{\text{H}}\mathbf{C}_{h-2}^{\text{H}}\mathbf{P}_{h-2}^{\text{H}}\mathbf{P}_{h-1}\mathbf{C}_{h-1}\mathbf{a}_{h-1}\right\} + \arg\left\{\mathbf{a}_{h-1}^{\text{H}}\mathbf{C}_{h-1}^{\text{H}}\mathbf{P}_{h-1}^{\text{H}}\mathbf{P}_{h}\mathbf{C}_{h}\mathbf{a}_{h}\right\} \tag{31}$$

Wendet man diese Kompensation auf den Strahlformer (20) an, erhält man:

$$\arg\left\{\widehat{\Delta\varphi_{\text{MVEig},m}}\right\} = \arg\left\{\Delta\varphi_{\text{MVEig}}\right\} - \varphi_{\text{Comp}} \tag{32}$$

$$\approx -\phi_{h-2} + \arg\left\{\mathbf{a}_{h-2}^{\text{H}}\mathbf{C}_{h-2}^{\text{H}}\mathbf{P}_{h-2}^{\text{H}}\mathbf{P}_{h-1}\mathbf{C}_{h-1}\mathbf{a}_{h-1}\right\} \tag{33}$$

$$\approx -\phi_{h-2} + \arg\left\{\mathbf{a}_{h}^{\text{H}}\mathbf{C}_{h}^{\text{H}}\mathbf{P}_{h-2}^{\text{H}}\mathbf{P}_{h-1}\mathbf{C}_{h}\mathbf{a}_{h}\right\} \tag{34}$$

Der durch den neuen Gewichtungsvektor induzierte Phasenfehler ist derselbe wie der Phasenfehler des vorherigen Gewichtungsvektors, wobei jedoch der Phasenversatz durch die vorherige Änderung des Voraufhellungsfilters entfernt wird. Wenn wir annehmen, dass sich die Voraufhellungsmatrix in der vorherigen Iteration nicht geändert hat, d.h. $\mathbf{P}_{h-2} = \mathbf{P}_{h-1}$, wird der zweite Term zu Null, d.h. $\arg\left\{\mathbf{a}_{h}^{\text{H}}\mathbf{C}_{h}^{\text{H}}\mathbf{P}_{h-2}\mathbf{P}_{h-1}\mathbf{C}_{h}\mathbf{a}_{h}\right\} = 0$. Dies kann genutzt werden, um eine Phasenänderung zu verhindern, die durch die räumliche Signalverarbeitung in einer sich ändernden Umgebung verursacht wird.

Die Abhängigkeit vom vorherigen Gewichtungsvektor ist jedoch auch der größte Nachteil dieses Ansatzes: Ein Phasenfehler in der vorherigen Iteration wird auf die nächste Phasenkompensation übertragen. Daher wird die induzierte Phase bei diesem Kompensationsansatz mit der Zeit driften. Außerdem müssen wir den anfänglichen Phasenfehler kennen (oder schätzen).

VERARBEITUNG DER SIGNALE UND IMPLEMENTIERUNG DES VORGESCHLAGENEN ALGORITHMUS

Um den vorgeschlagenen Kompensationsalgorithmus zu analysieren, nehmen wir GNSS-Satellitensignale auf und verarbeiten sie. Dazu führen wir die folgenden Schritte durch:

1) Aufzeichnung der GNSS-Signale mit einem geeigneten Mehrkanal-Datenstreamer.

2) Verwendung eines Software-Empfängers zur Verarbeitung der Signale und Erzeugung von Code- und Trägerbereichsbeobachtungen im RINEX-Format.

3) Einlesen der RINEX-Datei mit Hilfe der RTKlib zur Schätzung einer RTK-Positionslösung.

Aufzeichnung von Signalen

Die Ettus USRP x300 Plattform wird zur Digitalisierung und Speicherung der GNSS-Signale verwendet. Die wichtigsten Einstellungen sind:

- Mittenfrequenz: 1575.42MHz
- Zwischenfrequenz der digitalisierten Signale: 0Hz (komplexe I&Q-Abtastung)
- Abtastrate: 5MHz
- Anzahl der Aufzeichnungskanäle: 4

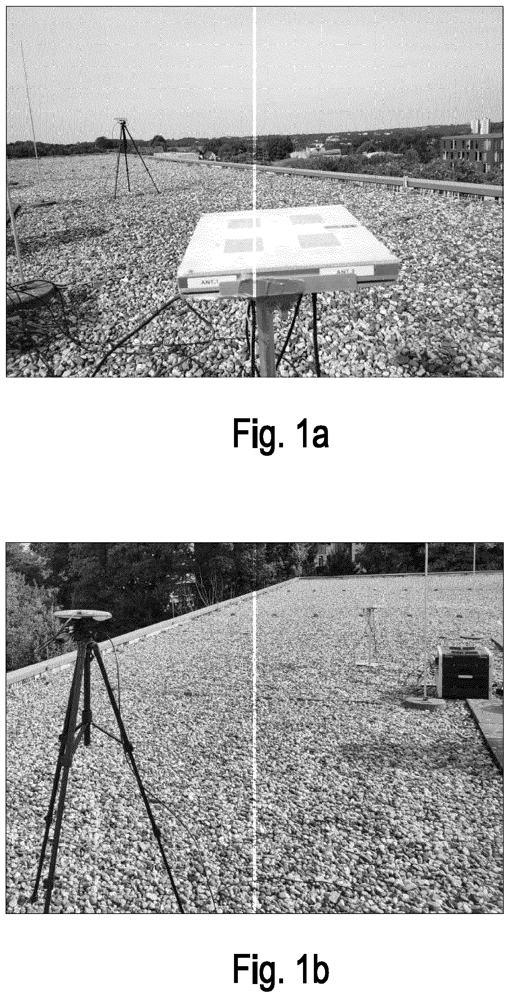

Die vier Kanäle sind mit dem vom DLR entwickelten und hergestellten UNITAS-Antennen-Array verbunden, das im Vordergrund von Abb. 1a zu sehen ist. Es handelt sich um ein einheitliches rechteckiges 2x2 Antennen-Array mit einem Abstand der Antennenelemente von ca. einer halben Wellenlänge L1 (ungefähr $\lambda_{\text{L1}}$ = 19.04 cm, $\frac{\lambda_{\text{L1}}}{2} = 9.52\,\text{cm}$). Die aufgezeichneten Signalproben werden auf einer Festplatte gespeichert und anschließend von einem Mehrantennen-Software-empfänger nachbearbeitet.

Verarbeitung des aufgezeichneten Signals

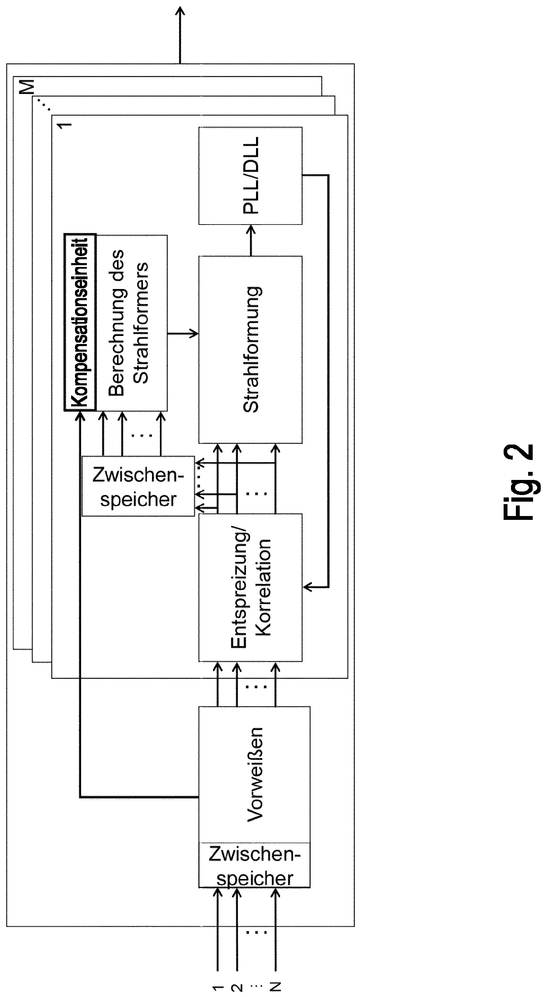

Der verwendete GNSS-Softwareempfänger ist in MATLAB implementiert. Abb. 2 zeigt das Funktionsdiagramm des Empfängers. Die $N$ Eingangssignale werden gepuffert, um eine räumliche Kovarianzmatrix, die so genannte Vorkorrelations-Kovarianzmatrix, zu schätzen (siehe Gleichung (6)). Diese Kovarianzmatrix wird zur Schätzung der Prewhitening-Filtermatrix verwendet, die dazu dient, Störsignale abzuschwächen. Die Filtermatrix wird dann auf das Eingangssignal angewendet (siehe Gleichung (7)). Die Entspreizung des Signals wird für jeden Satelliten einzeln durchgeführt. Das Nach-Korrelations-Beamforming arbeitet mit den N Ausgängen der Entspreizungs-/Korrelationseinheit. Die Ausgänge werden über mehrere Korrelationsepochen gepuffert, um die Kovarianzmatrix der Nachkorrelation zu berechnen (siehe Gleichung (9)). Um sicherzustellen, dass diese Kovarianzmatrix keine Signale mit unterschiedlichen Vorkorrelationsfiltermatrizen enthält, werden die Puffer für die Vor- und Nachkorrelation synchronisiert. Die Nachkorrelations-Kovarianzmatrix wird zur Berechnung des Eigenbeamformer-Gewichtungsvektors verwendet (siehe Gleichung (10)). Der vorgeschlagene Kompensationsansatz, wie er in den vorherigen Abschnitten beschrieben wurde, wird zur Anpassung der Phase des Eigenbeamformers verwendet. Der angepasste Eigenbeamformer wird auf den Ausgang der Entspreizungs-/Korrelationseinheit angewendet, und das Ergebnis wird in die PLL/DLL-Nachführschleifen eingespeist. Die PLL und DLL sind wie in einem herkömmlichen Einzelantennenempfänger implementiert (z.B. [12]). Die Zustände der PLL und der DLL werden weiter verwendet, um den Pseudobereich und den akkumulierten Dopplerbereich (ADR) zu erzeugen. Diese werden in der RINEX-Beobachtungsdatei gespeichert, die an die RTKlib weitergegeben wird.

RTK-Positionierung

Die RTKlib (Version 2.4.3 b34) wird verwendet, um eine RTK-Positionslösung aus der RINEX-Beobachtungsdatei zu erhalten. Zusätzlich wird eine RINEX-Navigationsdatei heruntergeladen, um die Ephermeris- und Uhrendaten verfügbar zu machen. Die RTKlib wird so eingestellt, dass sie die Datei im Modus "Statische Position" verarbeitet und die ganzzahlige Mehrdeutigkeit im Modus "Kontinuierlich" fixiert. Wenn die RTKlib mindestens vier ganzzahlige Mehrdeutigkeiten korrigieren kann und das Validierungsverhältnis größer als 3 ist, bezeichnen wir die Lösung als "RTK Fix". Andernfalls bezeichnen wir sie als "RTK Float". Zusätzlich benötigt eine RTK-Positionslösung eine Referenzstation. Für die Auswertungen in dieser Arbeit wurde eine Referenzstation des Satellitenpositionierungsdienstes der deutschen Landesvermessungsämter in Aachen (SAPOS®)[13] verwendet.

TABLE I: Jamming events in scenario 1.

| ID | Start Time (UTC) | Stop Time (UTC) | rel. Power [dB] |
|---|---|---|---|
| 1 | 13:01:28 | 13:02:20 | 20 |
| 2 | 13:02:20 | 13:02:50 | 26 |
| 3 | 13:02:50 | 13:03:20 | 32 |
| 4 | 13:03:20 | 13:03:50 | 38 |
| 5 | 13:03:50 | 13:04:22 | 44 |
| 6 | 13:04:22 | 13:04:50 | 50 |
| 7 | 13:04:50 | 13:05:19 | 56 |
| 8 | 13:05:19 | 13:05:50 | 62 |
| 9 | 13:05:50 | 13:06:20 | 68 |
| 10 | 13:06:20 | 13:06:50 | 74 |
| 11 | 13:06:50 | 13:07:19 | 80 |
| 12 | 13:07:19 | 13:07:51 | 86 |

SZENARIEN UND AUSWERTUNGSSCHRITTE

Szenarien

Für die Auswertung betrachten wir zwei unterschiedliche Szenarien. Beide Szenarien werden auf dem Dach des UMIC Forschungszentrums der RWTH Aachen am 21. September 2021 aufgenommen. Zwei Bilder des Messaufbaus sind in Fig. 1 zu sehen. Jedes Szenario beinhaltet ein Störsignal, das für das jeweilige Szenario spezifisch ist:

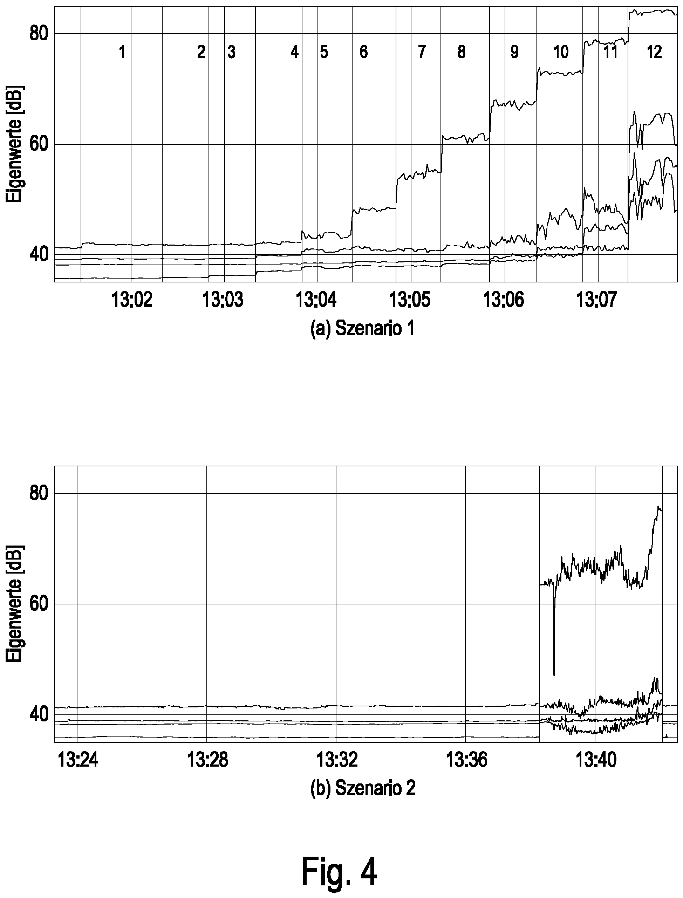

1) In Szenario 1 wird ein Störsender mit schrittweise ansteigender Signalleistung untersucht. Die Einfallsrichtung des Störsignals auf das Antennenfeld bleibt dabei konstant. Die Störleistung wird nach jeweils 30s um 6dB erhöht. Tabelle I zeigt die relative Leistung der einzelnen Stufen sowie die Start- und Stoppzeit. Fig. 4a zeigt die Eigenwerte der vom Empfänger berechneten Präkorrelations-Kovarianzmatrix. Wie in der Abbildung zu sehen ist, kann die Streuung der Eigenwerte verwendet werden, um die Leistung des eingehenden Störsignals im Verhältnis zur Rauschuntergrenze des Empfängers abzuschätzen.

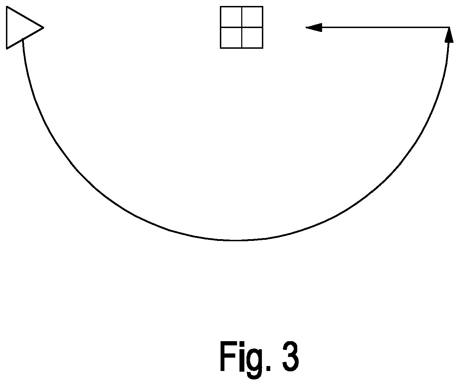

2) In Szenario 2 wird ein sich bewegender Störsender mit konstantem Leistungspegel untersucht. Die Störantenne wird in einem Halbkreis um die UNITAS-Antennengruppe und anschließend in Richtung der UNITAS-Antennengruppe bewegt. Diese Bewegung ist in Fig. 3 gezeigt. Die Bewegung wurde manuell durchgeführt, daher ist sie nicht so perfekt wie dargestellt. Das Störungsereignis beginnt um 13:38:16 UTC und endet um 13:42:04. Bei Verwendung der gleichen relativen Leistungsskala wie in Tabelle I strahlt der Störsender 62 dB ab (Stufe 8). Aufgrund der Bewegung der Antenne variiert jedoch die empfangene Leistung des Störsignals. Die Variation kann durch Auftragen der Leistung der Eigenwerte der Vorkorrelations-Kovarianzmatrix veranschaulicht werden, wie in Fig. 4b dargestellt. Man kann beobachten, dass die Leistung des empfangenen Signals bei einem Wert beginnt, der mit Stufe 8 in Szenario 1 vergleichbar ist, und auf einen Wert ansteigt, der mit Stufe 11 vergleichbar ist.

Auswertung

Jedes Szenario wird in drei verschiedenen Modi verarbeitet:

1) Einzelantenne: In diesem Modus wird weder Prewhitening noch Beamforming verwendet. Stattdessen wird nur das Signal des ersten Array-Elements vom Software-Empfänger verarbeitet, der wie ein konventioneller Ein-Antennen-Empfänger arbeitet.

2) ohne Phasenkompensation: In diesem Modus verwendet der Empfänger Prewhitening und Beamforming, kompensiert aber einen möglichen Phasenversatz nicht. Das Prewhitening wird nur aktiviert, wenn der größte Eigenwert der Vorkorrelations-Kovarianzmatrix 10dB höher ist als der kleinste Eigenwert. Dadurch wird sichergestellt, dass der Filter die Trägerphase der Satellitensignale nicht beeinflusst, solange keine ernsthaften Störungen vorliegen. Die Gewichte der Eigenbeamformer werden so normiert, dass das erste Element (entsprechend Antenne 1) gleich 1 bleibt, d.h. positiv und reellwertig ist. Ohne Störsignal führt dies zu einer ähnlichen Positionsbestimmung wie im Einzelantennenmodus. Das strahlgeformte Signal hat jedoch ein besseres C/N0, da es das Eingangssignal von N Antennen überlagert.

3) w/Phasenkompensation: In diesem Modus verwendet der Empfänger Prewhitening und Beamforming sowie den vorgeschlagenen Algorithmus zur Kompensation von Phasenabweichungen. Wie im Modus ohne Phasenkompensation wird die Prewhitening-Matrix nur angewendet, wenn der größte Eigenwert der Vorkorrelations-Kovarianzmatrix 10 dB höher ist als der kleinste Eigenwert. Die Phase des Strahlformers wird mit dem vorgeschlagenen Algorithmus geschätzt. Zur Initialisierung des Eigenstrahlformers oder wenn der Raumfilter nicht angewendet wird, wird die Phase des Strahlformers jedoch wie im Modus ohne Phasenkompensation geschätzt, d.h. das erste Element des Strahlformers ist gleich 1.

ERGEBNISSE UND DISKUSSION

Szenario 1: Störsender mit schrittweise ansteigender Signalleistung

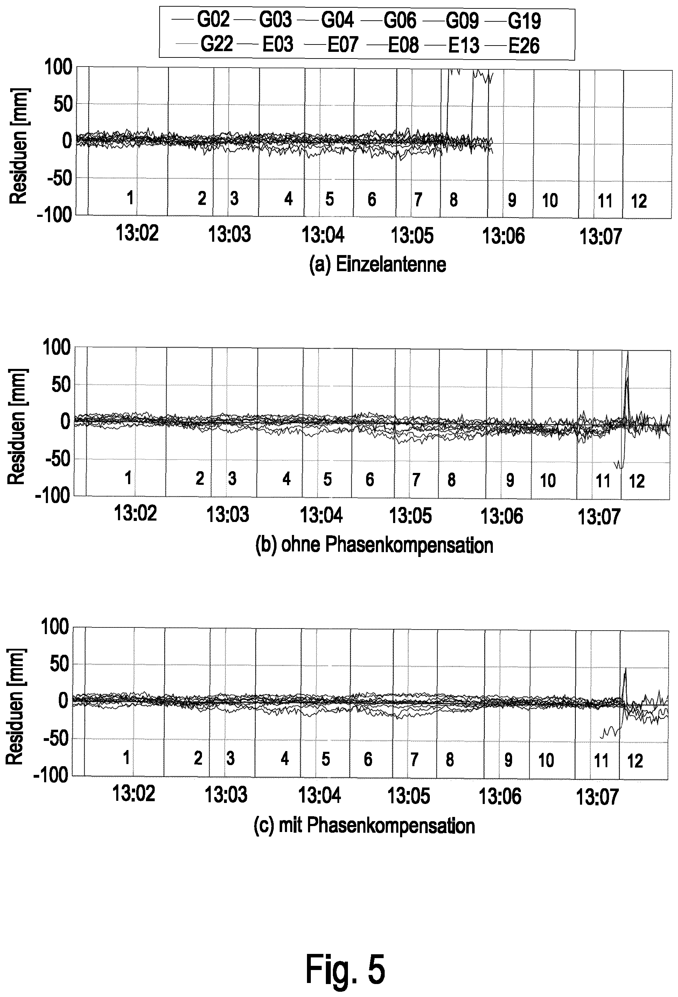

Fig. 5 zeigt die Residuen der Trägerphase, wie sie von der RTKlib für die drei verschiedenen Modi geschrieben wurden: Einzelantenne (5a), ohne Phasenkompensation (5b) und mit Phasenkompensation (5c). Die Diagramme zeigen nur die Ergebnisse für die feste RTK-Lösung. Der Beginn und das Ende jeder Phase, wie in Tabelle I definiert, sind rot hervorgehoben. Aufgrund des Störsignals hat die Einzelantenne in Phase 8 Schwierigkeiten, die Satellitensignale zu verfolgen; bei zwei oder mehr Satelliten kommt es zu einem Zyklusfehler. In der nächsten Phase (Phase 9) ist der Einzelantennenempfänger nicht mehr in der Lage, die Satellitensignale zu verfolgen, und verliert sie alle.

Die Verwendung des Prewhitening-Filters ermöglicht es, eine RTK-FIX-Lösung bis zur Stufe 12 aufrechtzuerhalten (Fig. 5b). In Stufe 12 gehen einige Satelliten verloren und die Residualwerte der verbleibenden Satelliten steigen an. Der Hauptgrund hierfür ist der Clipping-Effekt, der während des Digitalisierungsprozesses auftritt, da das Aufzeichnungssystem (USRP X300) keine automatische Verstärkungsregelung (AGC) verwendet.

In diesem Szenario schneidet der Phasenkompensationsalgorithmus (Fig. 5c) nur geringfügig besser ab als der Empfänger ohne Phasenkompensation (Fig. 5b): Die Residuen in den Stufen 8, 9, 10 und 11 sind etwas geringer und der Sprung einiger Residuen in Stufe 12 ist nicht so groß wie ohne Phasenkompensation. In diesem Szenario mit statischer Empfänger-Jammer-Geometrie ist die Phasenkompensation jedoch nicht explizit notwendig, aber auch nicht schädlich.

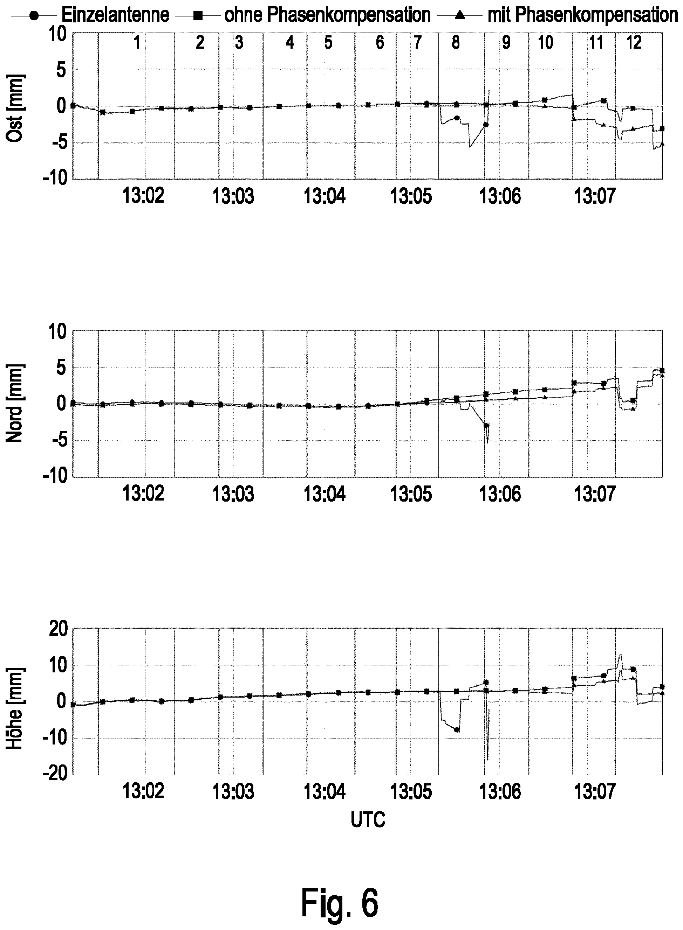

Fig. 6 zeigt den relativen Positionsoffset für die drei Modi getrennt für Ost, Nord und Höhe. Die Ergebnisse sind auf die mittlere Position der Einzelantennenverarbeitung bezogen. Ähnlich wie in den vorangegangenen Diagrammen ist zu beobachten, dass die Einzelantenne Schwierigkeiten hat, die Signale in Stufe 8 zu verfolgen (was zu einem deutlich sichtbaren Positions-Offset führt) und diese in Stufe 9 verliert. Die Verwendung des Prewhitening-Filters ermöglicht die Schätzung einer RTK-FIX-Lösung bis zur Stufe 12. Allerdings verliert der Empfänger ab Stufe 11 die Verbindung zu einigen Satelliten, was an den kleinen Sprüngen in den Positionsschätzungen zu erkennen ist. In diesem statischen Szenario ist die Drift der Positionslösung mit und ohne Trägerphasenkompensation vergleichbar.

Szenario 2: Beweglicher Störsender mit konstantem Leistungspegel

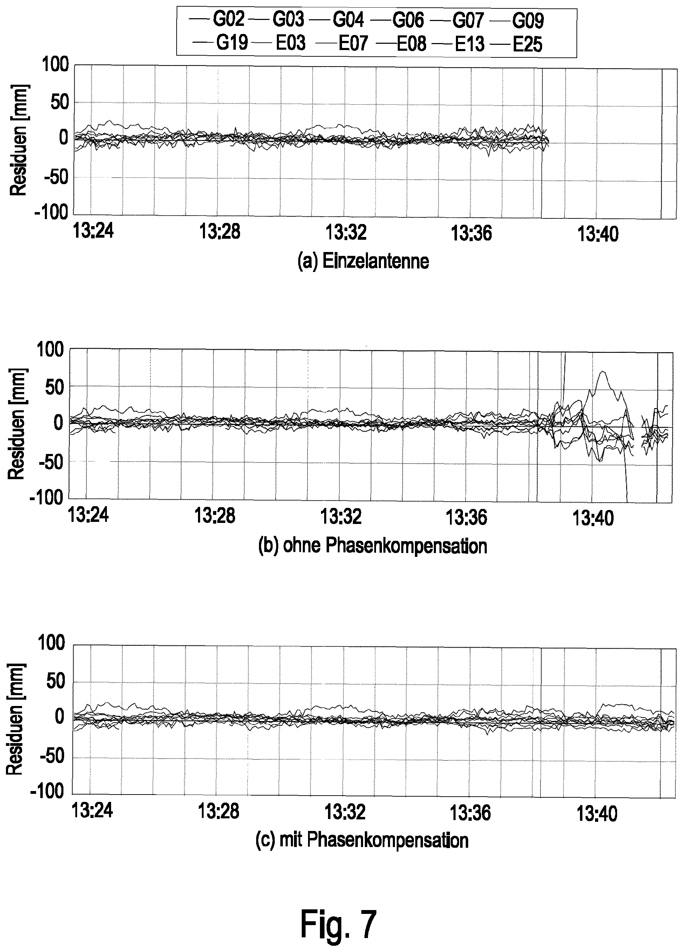

Fig. 7 zeigt die Trägerphasenresiduen für Szenario 2 für die verschiedenen Verarbeitungsmodi. In diesem Szenario bleibt die Leistung des abgestrahlten Störsignals konstant, aber die Richtung des Eintreffens des Störsignals an der Empfängerantenne ändert sich aufgrund der Bewegung der Störantenne mit der Zeit. Außerdem variiert die empfangene Störleistung an der Antennengruppe aufgrund des sich ändernden Abstands zwischen Störsender und Empfangsantenne (siehe 3b). Der Zeitpunkt, zu dem die Störung aktiviert wird, ist in allen relevanten Abbildungen durch zwei vertikale Linien gekennzeichnet.

Ähnlich wie bei Szenario 1 ist der Einzelantennenmodus nicht in der Lage, die Satellitensignale zu verfolgen, während das Störsignal aktiv ist. Die Verwendung des Voraufhellungsfilters ermöglicht die Verfolgung der Satellitensignale über die gesamte Länge der Signalaufzeichnung. In diesem Szenario lässt sich der Vorteil des vorgeschlagenen Phasenkompensationsalgorithmus deutlich demonstrieren: Während ohne Phasenkompensation die Trägerresiduen in der Zeit, in der der Störsender aktiv ist, deutlich ansteigen, bleiben sie bei Verwendung des vorgeschlagenen Kompensationsansatzes niedrig. Ohne die Phasenkompensation ist die RTK-FIX-Lösung sogar für mehrere Sekunden nicht verfügbar.

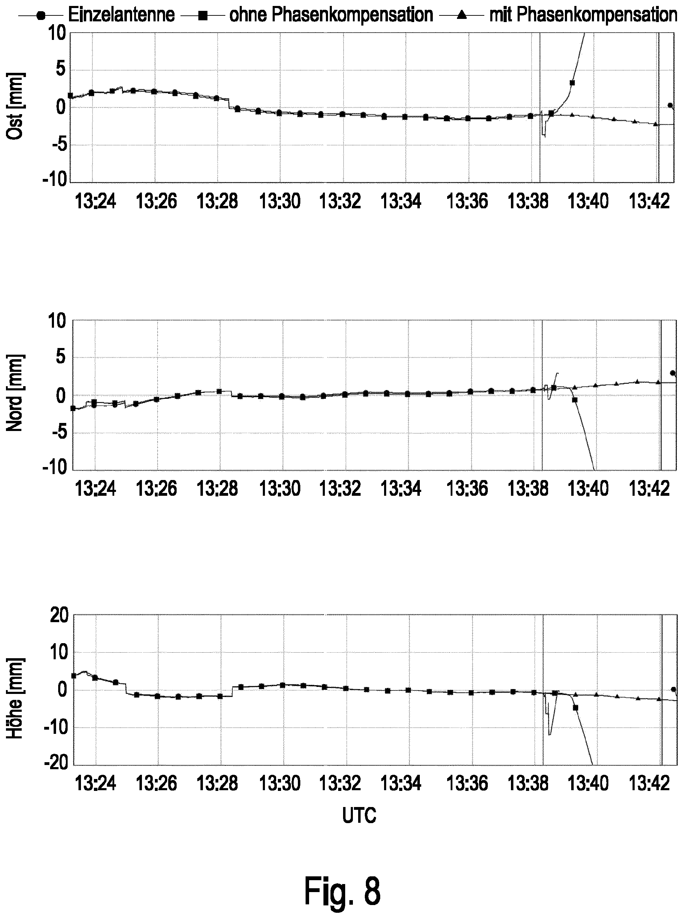

Die Ergebnisse für die Positionsabweichung in Abb. 8 unterstützen ebenfalls die Schlussfolgerung über den Nutzen des vorgeschlagenen Ansatzes. Ohne Phasenkompensation driftet die Positionslösung deutlich, wenn der Störsender aktiviert ist. Wie in den vorherigen Diagrammen zu sehen ist, geht die RTK-FIX-Lösung sogar verloren. Mit der Phasenkompensation weisen die geschätzten Positionslösungen dagegen nur geringe Abweichungen auf, die unter störungsfreien und störungsbehafteten Bedingungen in der gleichen Größenordnung liegen.

Im Rahmen dieser Erfindung wird ein Algorithmus zur Kompensation der Trägerphasendrehungen vorgeschlagen, die bei "blinder" räumlicher Signalverarbeitung auftreten. "Blind" bedeutet in diesem Zusammenhang, dass der Benutzer keine Vorabinformationen über das phasengesteuerte Antennendiagramm oder das Frontend kennen muss. Der vorgeschlagene Algorithmus wurde in zwei verschiedenen Szenarien unter Verwendung eines firmeneigenen Softwareempfängers in Kombination mit der RTKlib getestet, die zur Schätzung einer RTK-Lösung verwendet wurde. Im ersten Szenario wurde die Signalleistung eines Störsenders von einer konstanten DoA schrittweise erhöht und im zweiten Szenario wurde ein Störsender mit konstanter Signalleistung um die Empfangsantennengruppe bewegt. Für beide Szenarien wurde der vorgeschlagene Algorithmus mit einem Mehrantennensystem ohne Kompensation der Phasendrehung und mit einer Einzelantennenverarbeitung verglichen.

Wie erwartet, ist der Einzelantennenempfänger nicht in der Lage, eine Positionslösung zu schätzen, sobald das Störsignal zu stark wird. Das Mehrantennensystem unterdrückt die Störung durch Voraufhellung und ist in der Lage, die Satellitensignale während der Störeinflüsse zu verfolgen. Es erzeugt kontinuierliche Code- und Trägerbereichsbeobachtungen, die eine Positionierungslösung liefern. Ohne Kompensation der Phasenabweichungen beginnen jedoch die von der RTKlib geschätzten Trägerphasenresiduen, in der sich (schnell) ändernden Umgebung (sich bewegender Störsender) zu wachsen. Infolgedessen kann die RTKlib nicht mehr eine RTK-FIX-Lösung, sondern nur noch eine FLOAT-Lösung schätzen. Außerdem beginnt die Positionslösung zu driften, obwohl wir ein statisches Szenario analysiert haben. Mit der Erfindung kann dieses Problem entschärft werden. Die Residuen der Trägerphase nehmen im Vergleich zum störungsfreien Zeitraum nicht zu, und die RTK-FIX-Lösung kann während des gesamten aufgezeichneten Zeitraums beibehalten werden.

Die Erfindung ermöglicht es, die Vorteile einer Antennengruppe (ohne auf detaillierte Informationen über das Antennendiagramm angewiesen zu sein) zusammen mit einer RTK-Positionslösung zu nutzen. Sie eignet sich am besten für Situationen, in denen eine Lösung mit mittlerer oder hoher Genauigkeit (dmbis cm-Genauigkeit) gegen Störungen unempfindlich sein muss. Eine sehr genaue Lösung (cm- bis mm-Genauigkeit), vergleichbar mit einem geodätischen Empfänger, der die Variationen des Antennenphasenzentrums nutzt, kann mit diesem Algorithmus nicht erreicht werden. Dies ist nicht verwunderlich, da der Algorithmus keine detaillierten Informationen über das Antennendiagramm verwendet oder benötigt. Eine alternative Lösung für ein solches Szenario wäre die Verwendung eines deterministischen Beamforming-Ansatzes, der jedoch in hohem Maße von der Kenntnis der in Amplitude und Phase eingebetteten Muster der Gruppenantennen abhängig wäre.

REFERENZEN

[1] M. Cuntz, A. Konovaltsev, M. Sgammini, et al., "Field test: Jamming the DLR adaptive antenna receiver", in Proceedings of the 24th International Technical Meeting of The Satellite Division of the Institute of Navigation (ION GNSS 2011), Portland, OR, USA, vol. 2023, 2011, p. 384392.

[2] M. Meurer, A. Konovaltsev, M. Appel, and M. Cuntz, "Direction-of-Arrival Assisted Sequential Spoofing Detection and Mitigation", p. 12, 2016.

[3] A. Konovaltsev, M. Cuntz, C. Hättich, and M. Meurer, "Autonomous Spoofing Detection and Mitigation in a GNSS Receiver with an Adaptive Antenna Array", presented at the ION GNSS+ 2013, Nashville, TN, USA: The Institute of Navigation, Sep. 30, 2013.

[4] Q. Jia, R. Wu, W. Wang, D. Lu, and L. Wang, "Adaptive blind antijamming algorithm using acquisition information to reduce the carrier phase bias", GPS Solutions, vol. 22, no. 4, p. 99, Jul. 19, 2018, ISSN: 1521-1886. DOI: 10.1007/s10291018-0764-4.

[5] T. Bamberg, A. Konovaltsev, and M. Meurer, "Mitigation of Carrier Phase Distortions Induced by Spatial Filtering using Antenna Arrays", in Proceedings of the 33rd International Technical Meeting of the Satellite Division of The Institute of Navigation (ION GNSS+ 2020), Oct. 28, 2020, pp. 3120-3131. DOI: 10.33012/2020.17707.

[6] S. Daneshmand, T. Marathe, and G. Lachapelle, "Millimetre Level Accuracy GNSS Positioning with the Blind Adaptive Beamforming Method in Interference Environments", Sensors (Basel, Switzerland), vol. 16, no. 11, Oct. 31, 2016, ISSN: 1424-8220. DOI: 10.3390/s16111824. pmid: 27809252.

[7] T. Bamberg and M. Meurer, "Characterizing the Carrier Phase Distortions for Different Interference Mitigation Approaches using an Antenna Array", in Proceedings of the 32nd International Technical Meeting of the Satellite Division of The Institute of Navigation (ION GNSS+ 2019), Miami, Florida, Oct. 11, 2019, pp. 3517-3527. DOI: 10.33012/2019. 16933.

[8] T. Takasu and A. Yasuda, "Development of the low-cost RTK-GPS receiver with an open source program package RTKLIB", International Symposium on GPS/GNSS, Jan. 1, 2009.

[9] S. Zorn, M. Niestroj, S. Caizzone, M. Brachvogel, and M. Meurer, "Selfcontained Antenna Crosstalk and Phase Offset Calibration by Jointly Solving the Attitude Estimation and Calibration Problem", in ION GNSS 2017, Portland, Orgeon, USA, Jul. 7, 2017.

[10] S. Zorn, T. Bamberg, and M. Meurer, "Accurate Position and Attitude Determination in a Jammed or Spoofed Environment Using an Uncalibrated Multi-Antenna-System", Proceedings of the 2018 International Technical Meeting of The Institute of Navigation, p. 13, 2018.

[11] M. Sgammini, F. Antreich, L. Kurz, M. Meurer, and T. G. Noll, "Blind Adaptive Beamformer Based on Orthogonal Projections for GNSS", presented at the ION GNSS 2012, Nashville, USA, Sep. 2012.

[12] E. Kaplan and C. Hegarty, Understanding GPS: Principles and Applications. Artech House, 2005, 718 pp., ISBN: 978-1-58053-895-4.

[13] "Satellite Positioning Service of the German State Surveying Agencies - SAPOS®." (), [Online]. Available: https://www.bezregkoeln.nrw.de/brk_internet/geobasis/raumbezug/sapos/index.html (visited on 11/29/2021).

US-A-2002/0169578

WO-A-02/051028

US-A-2017/0102445

WO-A-98/032239

**Patentansprüche**

1. Verfahren zur Reduktion von Auswirkungen einer Störunterdrückung auf die Messung der Trägerphasen von Satellitennavigationssignalen am Ort ihres Empfangs, wobei bei dem Verfahren

   a) ein ein- oder mehrdimensionales Antennenarray mit mehreren Empfangsantennen bereitgestellt wird,
   b) von den Empfangsantennen empfangene Satellitennavigationssignale in einer Signalverarbeitungseinheit verarbeitet werden,
   c) auf eines der oder jedes der empfangenen Satellitennavigationssignale ein Eigenbeamformer angewendet und diesen beschreibende Parameter berechnet werden,
   d) die Parameter des Eigenbeamformers des einen Satellitennavigationssignals oder jedes Satellitennavigationssignals zu Zeitpunkten gemessen oder ermittelt werden, zu denen keine Störunterdrückung durchzuführen ist, wobei die Parameter so initialisiert werden, dass das von einer zuvor festgelegten Empfangsantenne des Antennenarrays empfangene Satellitennavigationssignal unverändert durchgelassen wird,
   e) die empfangenen Satellitennavigationssignale in der Signalverarbeitungseinheit mittels eines Raumfilters, d.h. mittels spatial filtering, wie z.B. durch ein Power Inversion (PI) Filter oder ein Projektionsfilter, einer Störunterdrückung unterzogen werden, nach deren Durchführung die Trägerphasen der Satellitennavigationssignale verfälscht sind,

f) nach der Störunterdrückung mittels der Signalverarbeitungseinheit die Trägerphase mindestens eines der oder jedes der Satellitennavigationssignale durch Berechnung von Parametern aus dem den jeweiligen Satellitennavigationssignal zugeordneten, aktuellen und den dem jeweiligen Satellitennavigationssignal zugeordneten, zeitlich vorangegangenen Eigenbeamformern einschließlich des Eigenbeamformers gemäß Merkmal d), verändert wird, so dass die durch die Störsignalunterdrückung entstehenden Verfälschungen der Trägerphasen korrigiert werden.

2. Verfahren nach Anspruch 1, **dadurch gekennzeichnet, dass** die jeweilige Störunterdrückung durch einen Satz von Signalverarbeitungsparametern zur Anwendung auf die störzuunterdrückenden Satellitennavigationssignale definiert wird, wobei sich dieser Parametersatz bei Veränderung von die Satellitennavigationssignale beeinflussenden Störungen, die aus Störsignalen in der Umgebung des Empfängers oder aufgrund von Infrastruktur in der Umgebung des Empfängers entstehen, verändert, und dass bei einer Änderung der Störung

- für das mindestens eine Satellitennavigationssignal oder für jedes Satellitennavigationssignal die Parameter eines neuen Eigenbeamformers berechnet werden, so dass sich die zuvor berechnete Trägerphase des mindestens einen Satellitennavigationssignals oder jedes Satellitennavigationssignals bei Anwendung des betreffenden neuen Eigenbeamformers ergibt, und
- zur Kompensation der Änderung der durch den neuen Eigenbeamformer berechneten Trägerphase des mindestens einen Satellitennavigationssignals oder jedes Satellitennavigationssignals, die aus dem geänderten Parametersatz der Störunterdrückung resultiert, die Parameter des betreffenden neuen Eigenbeamformers zur Drehung der berechneten Trägerphase weiter verändert werden.

3. Verfahren nach Anspruch 1 oder 2, **dadurch gekennzeichnet, dass** zu Zeitpunkten, zu denen keine Störunterdrückung durchzuführen ist, die Parameter des mindestens einen Eigenbeamformers komplexwertige Strahlformungsgewichte definieren, mit denen die jeweiligen, von den Empfangsantennen pro Satellitennavigationssignal ausgegebenen Signale gewichtet werden, dass als Referenzposition entweder eine der Empfangsantennen ausgewählt wird, wobei das Gewicht für diese Empfangsantenne positiv, reellwertig (z.B. 1) gewählt wird, oder eine nicht mit einer der Empfangsantennen zusammenfallende Position innerhalb des Antennenarrays ausgewählt wird, und dass die komplexwertigen Gewichte für die Empfangsantennen des Antennenarrays so gewählt werden, dass die Trägerphase eines pro Satellitennavigationssignal resultierenden Summensignals nach der Gewichtung gleich der Trägerphase desjenigen dem Eigenbeamformer zugeordneten Satellitennavigationssignals ist, welches die als Referenzposition des Antennenarrays ausgewählte Empfangsantenne erreicht oder eine Antenne an der nicht mit einer Empfangsantenne zusammenfallenden Referenzposition des Antennenarrays erreichen würde, wobei das resultierende Summensignal berechnet wird als Summe der komplexwertig gewichteten, störunterdrückten Empfangsantennensignale, die sich ihrerseits anhand einer komplexwertigen Linearkombination der einzelnen digitalisierten Empfangsantennensignalen ergeben und die aus den Empfangsantennensignalen durch Anwendung der Störunterdrückung berechnet werden.

4. Verfahren nach einem der Ansprüche 1 bis 3, **dadurch gekennzeichnet, dass** die Strahlformungsgewichte des mindestens einen Eigenbeamformers bei ungestörten Satellitennavigationssignalen initialisiert werden, indem das Satellitennavigationssignal an der Referenzposition unverändert durchgelassen wird, womit auf diese Referenzposition bezogen durch die Strahlformung kein richtungsabhängiger Trägerphasenfehler entsteht, wobei bei einer anschließenden Störunterdrückung der zu berechnende Eigenbeamformer auf Basis des vorherigen Eigenbeamformers mit dem Ziel angepasst wird, dass die Phase eines resultierenden Summensignals weiterhin gleich der Trägerphase des Satellitennavigationssignals an der Referenzposition ist, wobei das resultierende Summensignal berechnet wird als Summe der komplexwertig gewichteten, störunterdrückten Empfangsantennensignale, die sich ihrerseits anhand einer komplexwertigen Linearkombination der einzelnen digitalisierten Empfangsantennensignalen ergeben und die aus den Empfangsantennensignalen durch Anwendung der Störunterdrückung berechnet werden.

5. Verfahren zur Ermittlung des Abstandes eines Empfängers für Satellitennavigationssignale zu einem Satelliten, wobei bei dem Verfahren

- das Verfahren nach einem der Ansprüche 1 bis 4 durchgeführt wird und
- anhand der berechneten Trägerphase des Satellitennavigationssignals der sogenannte Pseudo-Abstand des Empfängers zum Satelliten berechnet wird.

6. Verfahren zur Bestimmung der Position eines Empfängers für Satellitennavigationssignale, wobei bei dem Verfahren

    - das Verfahren nach Anspruch 5 durchgeführt wird und
    - anhand der Abstände des Empfängers zu mehreren Satelliten die Position des Empfängers ermittelt wird.

**Claims**

1. A method of reducing the effects of interference suppression on the measurement of the carrier phases of satellite navigation signals at the location of their reception, in which method

    a) a one- or multi-dimensional antenna array with a plurality of receiving antennas is provided,
    b) satellite navigation signals received by the receiving antennas are processed in a signal processing unit,
    c) an eigenbeamformer is applied to one or each of the received satellite navigation signals and parameters describing the same are calculated,
    d) the parameters of the eigenbeamformer of the one satellite navigation signal or of each satellite navigation signal are measured or determined at times when no interference suppression is to be performed, the parameters being initialized such that the satellite navigation signal received by a predetermined receiving antenna of the antenna array is passed unchanged,
    e) the received satellite navigation signals are subjected to interference suppression in the signal processing unit by means of a spatial filter, i.e. by means of spatial filtering, such as a power inversion (PI) filter or a projection filter, after which the carrier phases of the satellite navigation signals are distorted,
    f) after the interference suppression by means of the signal processing unit, the carrier phase of at least one or each of the satellite navigation signals is changed by calculating parameters from the current eigenbeamformer associated with the respective satellite navigation signal and the preceding eigenbeamformers associated with the respective satellite navigation signal, including the eigenbeamformer according to feature d), so that the distortions of the carrier phases resulting from the interference suppression are corrected.

2. The method according to claim 1, **characterized in that** the respective interference suppression is defined by a set of signal processing parameters for application to the satellite navigation signals to be suppressed, this set of parameters changing when interference affecting the satellite navigation signals, which interference arises from interference signals in the vicinity of the receiver or due to infrastructure in the vicinity of the receiver, changes, and that, when the interference changes,

    - the parameters of a new eigenbeamformer are calculated for the at least one satellite navigation signal or for each satellite navigation signal, so that the previously calculated carrier phase of the at least one satellite navigation signal or of each satellite navigation signal results when the respective new eigenbeamformer is applied, and
    - to compensate for the change in the carrier phase of the at least one satellite navigation signal or each satellite navigation signal calculated by the new eigenbeamformer resulting from the changed interference suppression parameter set, the parameters of the relevant new eigenbeamformer are further changed to rotate the calculated carrier phase.

3. The method according to claim 1 or 2, **characterized in that**, at times when no interference suppression is to be performed, the parameters of the at least one eigenbeamformer define complex-valued beamforming weights with which the respective signals output by the receiving antennas per satellite navigation signal are weighted, **in that** either one of the receiving antennas is selected as the reference position, the weight for this receiving antenna being selected to be positive, real-valued (e.g. 1), or a position within the antenna array which does not coincide with one of the receiving antennas is selected, and **in that** the complex-valued weights for the receiving antennas of the antenna array are selected such that the carrier phase of a sum signal resulting per satellite navigation signal after weighting is equal to the carrier phase of the satellite navigation signal assigned to the eigenbeamformer, which arrives at the receiving antenna selected as the reference position of the antenna array or which would reach an antenna at the reference position of the antenna array not coinciding with a receiving antenna, the resulting sum signal being calculated as the sum of the complex-valued weighted, interference-suppressed receiving antenna signals, which in turn result from a complex-valued linear combination of the individual digitized receiving antenna signals and which are calculated from the receiving antenna signals by applying the interference suppression.

**4.** The method according to one of claims 1 to 3, **characterized in that** the beamforming weights of the at least one eigenbeamformer are initialized with undisturbed satellite navigation signals by passing the satellite navigation signal at the reference position unchanged, whereby no direction-dependent carrier phase error arises in relation to this reference position as a result of the beamforming, the eigenbeamformer to be calculated being adapted, during a subsequent interference suppression, based on the previous eigenbeamformer with the aim that the phase of a resulting sum signal is still equal to the carrier phase of the satellite navigation signal at the reference position, the resulting sum signal being calculated as the sum of the complex-valued, interference-suppressed receiving antenna signals, which in turn result from a complex-valued linear combination of the individual digitized receiving antenna signals and which are calculated from the receiving antenna signals by applying the interference suppression.

**5.** A method for determining the distance of a receiver for satellite navigation signals from a satellite, in which method

- the method in accordance with one of claims 1 to 4 is performed, and
- the so-called pseudo-distance of the receiver to the satellite is calculated using the calculated phase of the satellite navigation signal.

**6.** A method for determining the position of a receiver for satellite navigation signals, in which method

- the method in accordance with claim 5 is performed, and
- the position of the receiver is determined using the distances between the receiver and several satellites.

**Revendications**

**1.** Procédé pour réduire les effets d'une suppression d'interférence sur la mesure des phases porteuses de signaux de navigation par satellite à l'endroit de leur réception, procédé dans lequel

a) un réseau d'antennes unidimensionnel ou multidimensionnel est fourni avec plusieurs antennes de réception,
b) les signaux de navigation par satellite reçus par les antennes de réception sont traités dans une unité de traitement des signaux,
c) on applique à l'un ou à chacun des signaux de radionavigation par satellite reçus un formateur de faisceau propre et on calcule des paramètres le décrivant,
d) les paramètres du formateur de faisceau propre de l'un des signaux de navigation par satellite ou de chaque signal de navigation par satellite sont mesurés ou déterminés à des instants auxquels aucune suppression d'interférence ne doit être effectuée, les paramètres étant initialisés de telle sorte que le signal de navigation par satellite reçu par une antenne de réception prédéterminée du réseau d'antennes soit transmis sans être modifié,
e) les signaux de navigation par satellite reçus sont soumis dans l'unité de traitement des signaux à une suppression des interférences au moyen d'un filtre spatial, c'est-à-dire au moyen d'un filtrage spatial, comme par exemple par un filtre d'inversion de puissance (PI) ou un filtre de projection, après l'exécution duquel les phases porteuses des signaux de navigation par satellite sont faussées,
f) après la suppression des interférences au moyen de l'unité de traitement des signaux, la phase porteuse d'au moins l'un des signaux de navigation par satellite ou de chacun d'eux est modifiée par calcul de paramètres à partir du formateur de faisceau propre actuel associé au signal de navigation par satellite respectif et du formateur de faisceau propre précédent dans le temps associés au signal de navigation par satellite respectif, y compris le formateur de faisceau propre selon la caractéristique d), de sorte que les distorsions des phases porteuse résultant de la suppression des interférences soient corrigées.

**2.** Procédé selon la revendication 1, **caractérisé en ce que** la suppression d'interférence respective est définie par un ensemble de paramètres de traitement de signal pour l'application aux signaux de navigation par satellite à supprimer d'interférence, lequel ensemble de paramètres varie lors de la modification des interférences affectant les signaux de navigation par satellite, qui résultent de signaux d'interférence dans l'environnement du récepteur ou en raison de l'infrastructure dans l'environnement du récepteur, et **en ce que**, lors d'une modification de l'interférence

- pour ledit au moins un signal de navigation par satellite ou pour chaque signal de navigation par satellite, les paramètres d'un nouveau formateur de faisceau propre sont calculés, de sorte que la phase porteuse précédemment calculée dudit au moins un signal de navigation par satellite ou de chaque signal de navigation par satellite soit obtenue en appliquant le nouveau formateur de faisceau propre concerné, et
- pour compenser la modification de la phase porteuse calculée par le nouveau formateur de faisceau propre de l'au moins un signal de navigation par satellite ou de chaque signal de navigation par satellite, qui résulte de l'ensemble modifié de paramètres de la suppression d'interférence, les paramètres du nouveau formateur de faisceau propre concerné sont encore modifiés pour faire tourner la phase porteuse calculée.

3. Procédé selon la revendication 1 ou 2, **caractérisé en ce que**, à des moments où aucune suppression d'interférence ne doit être effectuée, les paramètres de l'au moins un formateur de faisceau propre définissent des poids de mise en forme de faisceau à valeur complexe avec lesquels les signaux respectifs émis par les antennes de réception par signal de navigation par satellite sont pondérés, **en ce que**, comme position de référence, on choisit soit l'une des antennes de réception, le poids pour cette antenne de réception étant positif, à valeur réelle (par ex. 1), soit une position à l'intérieur du réseau d'antennes qui ne coïncide pas avec l'une des antennes de réception, et **en ce que** les poids à valeur complexe pour les antennes de réception du réseau d'antennes sont choisis de telle sorte que la phase porteuse d'un signal de somme résultant par signal de navigation par satellite soit, après la pondération, égale à la phase porteuse du signal de navigation par satellite associé au formateur de faisceau propre, qui atteint l'antenne de réception sélectionnée comme position de référence du réseau d'antennes ou qui atteindrait une antenne à la position de référence du réseau d'antennes ne coïncidant pas avec une antenne de réception, le signal de somme résultant étant calculé comme la somme des signaux d'antenne de réception pondérés de manière complexe et supprimés des perturbations, qui résultent à leur tour à l'aide d'une combinaison linéaire de valeur complexe des différents signaux d'antenne de réception numérisés et qui sont calculés à partir des signaux d'antenne de réception par application de la suppression d'interférence.

4. Procédé selon l'une des revendications 1 à 3, **caractérisé en ce que** les poids de formation de faisceau d'au moins un formateur de faisceau propre sont initialisés pour des signaux de navigation par satellite non perturbés, en laissant passer le signal de navigation par satellite inchangé à la position de référence, aucune erreur de phase porteuse dépendant de la direction n'étant ainsi générée par la formation de faisceau par rapport à cette position de référence, le formateur de faisceau propre à calculer étant adapté avec la cible sur la base du formateur de faisceau propre précédent lors d'une suppression d'interférence subséquente, que la phase d'un signal de somme résultant reste égale à la phase porteuse du signal de navigation par satellite à la position de référence, le signal de somme résultant étant calculé comme la somme des signaux d'antennes de réception pondérés de manière complexe et supprimés des perturbations, qui résultent à leur tour à l'aide d'une combinaison linéaire de valeur complexe des différents signaux d'antennes de réception numérisés et qui sont calculés à partir des signaux d'antennes de réception par application de la suppression d'interférence.

5. Procédé pour déterminer la distance d'un récepteur de signaux de navigation par satellite par rapport à un satellite, procédé dans lequel

- le procédé est mis en œuvre selon l'une des revendications 1 à 4, et
- à l'aide de la phase porteuse calculée du signal de navigation par satellite, on calcule ce que l'on appelle la pseudo-distance du récepteur par rapport au satellite.

6. Procédé pour déterminer la position d'un récepteur de signaux de navigation par satellite, procédé dans lequel

- le procédé est mis en œuvre conformément à la revendication 5, et
- la position du récepteur est déterminée à l'aide des distances entre le récepteur et plusieurs satellites.

Fig. 1a

Fig. 1b

Fig. 2

EP 4 469 828 B1

Fig. 3

(a) Szenario 1

(b) Szenario 2

Fig. 4

Fig. 5

Fig. 6

(a) Einzelantenne

(b) ohne Phasenkompensation

(c) mit Phasenkompensation

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022101576
- US 20020169578 A
- WO 02051028 A
- US 20170102445 A
- WO 98032239 A

**In der Beschreibung aufgeführte Nicht-Patentliteratur**

- **BAMBERG TOBIAS et al.** *Mitigation of Carrier Phase Distortions Induced by Spatial Filtering using Antenna Arrays*
- **M. CUNTZ** ; **A. KONOVALTSEV** ; **M. SGAMMINI et al.** Field test: Jamming the DLR adaptive antenna receiver. *Proceedings of the 24th International Technical Meeting of The Satellite Division of the Institute of Navigation (ION GNSS 2011), Portland, OR, USA*, 2011, vol. 2023, 384392
- **M. MEURER** ; **A. KONOVALTSEV** ; **M. APPEL** ; **M. CUNTZ**. *Direction-of-Arrival Assisted Sequential Spoofing Detection and Mitigation*, 2016, 12
- Autonomous Spoofing Detection and Mitigation in a GNSS Receiver with an Adaptive Antenna Array. **A. KONOVALTSEV** ; **M. CUNTZ** ; **C. HÄTTICH** ; **M. MEURER**. ION GNSS+ 2013. The Institute of Navigation, 30 September 2013
- **Q. JIA** ; **R. WU** ; **W. WANG** ; **D. LU** ; **L. WANG**. Adaptive blind antijamming algorithm using acquisition information to reduce the carrier phase bias. *GPS Solutions*, 19 July 2018, vol. 22 (4), ISSN 1521-1886, 99
- **T. BAMBERG** ; **A. KONOVALTSEV** ; **M. MEURER**. Mitigation of Carrier Phase Distortions Induced by Spatial Filtering using Antenna Arrays. *Proceedings of the 33rd International Technical Meeting of the Satellite Division of The Institute of Navigation (ION GNSS+ 2020),*, 28 October 2020, 3120-3131
- **S. DANESHMAND** ; **T. MARATHE** ; **G. LACHAPELLE**. Millimetre Level Accuracy GNSS Positioning with the Blind Adaptive Beamforming Method in Interference Environments. *Sensors (Basel, Switzerland),*, 31 October 2016, vol. 16 (11), ISSN 1424-8220
- **T. BAMBERG** ; **M. MEURER**. Characterizing the Carrier Phase Distortions for Different Interference Mitigation Approaches using an Antenna Array. *Proceedings of the 32nd International Technical Meeting of the Satellite Division of The Institute of Navigation (ION GNSS+ 2019), Miami, Florida*, 11 October 2019, 3517-3527
- **T. TAKASU** ; **A. YASUDA**. Development of the low-cost RTK-GPS receiver with an open source program package RTKLIB. *International Symposium on GPS/GNSS,*, 01 January 2009
- **S. ZORN** ; **M. NIESTROJ** ; **S. CAIZZONE** ; **M. BRACHVOGEL** ; **M. MEURER**. Selfcontained Antenna Crosstalk and Phase Offset Calibration by Jointly Solving the Attitude Estimation and Calibration Problem. *ION GNSS 2017, Portland, Orgeon, USA*, 07 July 2017
- **S. ZORN** ; **T. BAMBERG** ; **M. MEURER**. Accurate Position and Attitude Determination in a Jammed or Spoofed Environment Using an Uncalibrated Multi-Antenna-System. *Proceedings of the 2018 International Technical Meeting of The Institute of Navigation,*, 2018, 13
- **M. SGAMMINI** ; **F. ANTREICH** ; **L. KURZ** ; **M. MEURER** ; **T. G. NOLL**. Blind Adaptive Beamformer Based on Orthogonal Projections for GNSS. *ION GNSS 2012, Nashville, USA*, September 2012
- **E. KAPLAN** ; **C. HEGARTY**. Understanding GPS: Principles and Applications.. *Artech House*, 2005, ISBN 978-1-58053-895-4, 718
- *Satellite Positioning Service of the German State Surveying Agencies - SAPOS*, 29 November 2021, https://www.bezregkoeln.nrw.de/brk_internet/geobasis/raumbezug/sapos/index.html